(19) Europäisches Patentamt
European Patent Office
Office européen des brevets

(11) **EP 4 439 412 A1**

(12) **EUROPEAN PATENT APPLICATION**

(43) Date of publication:
**02.10.2024 Bulletin 2024/40**

(21) Application number: **24158922.5**

(22) Date of filing: **21.02.2024**

(51) International Patent Classification (IPC):
**G06Q 10/04** *(2023.01)* **G06Q 10/063** *(2023.01)*
**G06Q 10/08** *(2024.01)* **G06Q 10/0833** *(2023.01)*
**G06Q 50/04** *(2012.01)*

(52) Cooperative Patent Classification (CPC):
**G06Q 10/04; G06Q 10/063; G06Q 10/08;**
**G06Q 10/0833;** G06Q 50/04

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.03.2023 JP 2023051679**

(71) Applicant: **TOYOTA JIDOSHA KABUSHIKI KAISHA**
**Toyota-shi, Aichi-ken, 471-8571 (JP)**

(72) Inventors:
• **FUJIWARA, Teruyoshi**
**TOYOTA-SHI, AICHI-KEN, 471-8571 (JP)**
• **NITTA, Iwao**
**TOYOTA-SHI, AICHI-KEN, 471-8571 (JP)**
• **SUZUKI, Ryota**
**NAGOYA-SHI, AICHI-KEN, 451-6015 (JP)**

(74) Representative: **Cabinet Beau de Loménie**
**158, rue de l'Université**
**75340 Paris Cedex 07 (FR)**

(54) **INFORMATION PROCESSING DEVICE, INFORMATION PROCESSING METHOD, AND NON-TRANSITORY STORAGE MEDIUM**

(57) A control unit (11, 21) of an information processing device is configured to: receive a conversion coefficient from an account of a downstream company; store the conversion coefficient in a first storage area for which access authority is invested only in the account of the downstream company; convert a first value obtained from traceability information on a first product into a second value expressed in a second unit by using the conversion coefficient; and acquire traceability information on a second product by integrating the second value and a third value obtained from traceability-related information on the second product, and output a fourth value.

FIG. 13

EP 4 439 412 A1

**Description**

BACKGROUND OF THE INVENTION

1. Field of the Invention

The present disclosure relates to a supply chain.

2. Description of Related Art

There is known a system in which information is shared among a plurality of companies constituting a supply chain. For example, Japanese Unexamined Patent Application Publication No. 2004-171146 (JP 2004-171146 A) discloses a system in which product information is shared between adjacent suppliers.

SUMMARY OF THE INVENTION

The present disclosure provides an information processing device, an information processing method, and a non-transitory storage medium that can conceal, from other companies, conversion coefficients used when integrating pieces of data between companies in a supply chain.

One aspect of the present disclosure relates to an information processing device including a control unit. The control unit is configured to: receive a conversion coefficient input from an account of a downstream company in a supply chain out of an upstream company that manufactures a first product and the downstream company that manufactures a second product by using the first product, the conversion coefficient being a coefficient for converting a value expressed in a first unit into a value expressed in a second unit, the value expressed in the first unit being obtained from traceability information on the first product, the second unit being used for a value obtained from traceability-related information on the second product; store the conversion coefficient in a first storage area for which access authority is invested only in the account of the downstream company; convert a first value expressed in the first unit and obtained from the traceability information on the first product into a second value expressed in the second unit by using the conversion coefficient; and output a fourth value indicating first information, the first information being included in traceability information on the second product that is obtained by integrating the second value and a third value obtained from the traceability-related information on the second product in the downstream company.

In the information processing device, the first information included in the traceability information may be any of a carbon footprint of products (CFP) value, a recycling rate, and a score indicating a degree of fulfillment of due diligence information.

In the information processing device, the control unit may be configured to store the traceability information on the second product in a second storage area for which access authority is invested only in the account of the downstream company and an account of a third company that manufactures a third product by using the second product.

In the information processing device, the control unit may be configured to acquire the traceability information on the first product from a third storage area for which access authority is invested only in an account of the upstream company and the account of the downstream company.

In the information processing device, the control unit may be configured to store the traceability information on the second product in a fourth storage area for which access authority is invested only in an account of a third company that manufactures a third product by using the second product and writing authority is invested in the account of the downstream company by the account of the third company.

In the information processing device, the control unit may be configured to acquire the traceability information on the first product from the first storage area for which writing authority is invested in an account of the upstream company by the account of the downstream company.

In the information processing device, the control unit may be configured to transmit the fourth value indicating the first information included in the traceability information on the second product to a terminal associated with the account of the downstream company.

Another aspect of the present disclosure relates to an information processing method for executing, by a computer, a process including: receiving a conversion coefficient input from an account of a downstream company in a supply chain out of an upstream company that manufactures a first product and the downstream company that manufactures a second product by using the first product, the conversion coefficient being a coefficient for converting a value expressed in a first unit into a value expressed in a second unit, the value expressed in the first unit being obtained from traceability information on the first product, the second unit being used for a value obtained from traceability-related information on the second product; storing the conversion coefficient in a first storage area for which access authority is invested only in the account of the downstream company; converting a first value expressed in the first unit and obtained from the traceability information on the first product into a second value expressed in the second unit by using the conversion coefficient; and outputting a fourth value indicating first information, the first information being included in traceability information on the second product that is obtained by integrating the second value and a third value obtained from the traceability-related information on the second product in the downstream company.

In the information processing method, the first information included in the traceability information may be any of a carbon footprint of products (CFP) value, a recycling rate, and a score indicating a degree of fulfillment of due diligence information.

The information processing method may further include storing, by the computer, the traceability information on the second product in a second storage area for which access authority is invested only in the account of the downstream company and an account of a third company that manufactures a third product by using the second product.

The information processing method may further include acquiring, by the computer, the traceability information on the first product from a third storage area for which access authority is invested only in an account of the upstream company and the account of the downstream company.

The information processing method may further include storing, by the computer, the traceability information on the second product in a fourth storage area for which access authority is invested only in an account of a third company that manufactures a third product by using the second product and writing authority is invested in the account of the downstream company by the account of the third company.

The information processing method may further include acquiring, by the computer, the traceability information on the first product from the first storage area for which writing authority is invested in an account of the upstream company by the account of the downstream company.

The information processing method may further include transmitting, by the computer, the fourth value indicating the first information included in the traceability information on the second product to a terminal associated with the account of the downstream company.

Another aspect of the present disclosure relates to a non-transitory storage medium storing instructions that cause a computer to execute a process including: receiving a conversion coefficient input from an account of a downstream company in a supply chain out of an upstream company that manufactures a first product and the downstream company that manufactures a second product by using the first product, the conversion coefficient being a coefficient for converting a value expressed in a first unit into a value expressed in a second unit, the value expressed in the first unit being obtained from traceability information on the first product, the second unit being used for a value obtained from traceability-related information on the second product; storing the conversion coefficient in a first storage area for which access authority is invested only in the account of the downstream company; converting a first value expressed in the first unit and obtained from the traceability information on the first product into a second value expressed in the second unit by using the conversion coefficient; and outputting a fourth value indicating first information, the first information being included in traceability information on the second product that is obtained by integrating the second value and a third value obtained from the traceability-related information on the second product in the downstream company.

In the non-transitory storage medium storing the program, the process may include storing, by the computer, the traceability information on the second product in a second storage area for which access authority is invested only in the account of the downstream company and an account of a third company that manufactures a third product by using the second product.

In the non-transitory storage medium storing the program, the process may include acquiring, by the computer, the traceability information on the first product from a third storage area for which access authority is invested only in an account of the upstream company and the account of the downstream company.

In the non-transitory storage medium storing the program, the process may include storing, by the computer, the traceability information on the second product in a fourth storage area for which access authority is invested only in an account of a third company that manufactures a third product by using the second product and writing authority is invested in the account of the downstream company by the account of the third company.

In the non-transitory storage medium storing the program, the process may include acquiring, by the computer, the traceability information on the first product from the first storage area for which writing authority is invested in an account of the upstream company by the account of the downstream company.

In the non-transitory storage medium storing the program, the process may include transmitting, by the computer, the fourth value indicating the first information included in the traceability information on the second product to a terminal associated with the account of the downstream company.

According to the present disclosure, it is possible to conceal, from other companies, the conversion coefficients used when integrating pieces of data between companies in the supply chain.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

FIG. 1 shows an example of the system configuration of an information processing system;
FIG. 2 shows an example of a product tree;
FIG. 3 shows an example of a flow of a process to be performed in the information processing system;
FIG. 4 schematically shows an example of the hardware configuration of a server device according to a first embodiment;
FIG. 5 schematically shows an example of the hardware configuration of a company terminal according to the first embodiment;
FIG. 6 schematically shows the software configuration of the server device according to the first embodiment;
FIG. 7 schematically shows the software configuration of the company terminal according to the first embodiment;
FIG. 8 shows an example of product information;
FIG. 9 shows an example of a linking destination setting screen of the company terminal;
FIG. 10 shows an example of a conversion coefficient registration screen of the company terminal;
FIG. 11 shows an example of the configuration of storage areas of a storage unit;
FIG. 12 shows an example of a product tree based on disclosure permission setting;
FIG. 13 illustrates an example of a process for integrating pieces of traceability-related information;
FIG. 14 is an example of a flowchart of a conversion coefficient registration request process to be performed by the company terminal;
FIG. 15A is an example of a flowchart of a traceability information calculation process to be performed by the server device;
FIG. 15B is the example of the flowchart of the traceability information calculation process to be performed by the server device;
FIG. 16 shows an example of the configuration of storage areas of a storage unit according to a second embodiment; and
FIG. 17 shows an example of transfer of traceability information according to the second embodiment.

DETAILED DESCRIPTION OF EMBODIMENTS

In recent years, there has been a demand to trace the amounts of greenhouse gases emitted from products such as automobiles and batteries from manufacture of raw materials, components, etc. to manufacture of the products, that is, to trace a carbon footprint.

It is assumed that a product is supplied by a supply chain including a plurality of companies. In one example, at least some companies (intermediate suppliers) in the supply chain may receive components from one or more upstream companies, produce in-house products by using the received components, and deliver the produced in-house products to companies in the next step (downstream companies). Most upstream companies may directly produce in-house products and deliver the produced in-house products to companies in the next step. Some companies in the supply chain may directly deliver, to different companies, products received from other companies (i.e., participate in distribution). A plurality of companies repeats this process, and a final product is obtained in the final step.

In a case of automotive product acquisition, the supply chain may be constituted by an original equipment manufacturer (OEM) and a plurality of suppliers. The OEM may be a company that assembles a final product (most downstream company). The supplier may be a company that supplies components, materials, assemblies, etc. for producing the final product. The companies in the supply chain may be determined based on the product.

In the following description, the components etc. produced by the suppliers will be referred to as "products", and the product obtained finally will be referred to as "final product". In one example, the final product may be supplied to a consumer. The suppliers and the OEM in the supply chain will be referred to simply as "companies". A plurality of hierarchical levels of the supply chain will be referred to as "tiers".

For example, in order to calculate the total amount of greenhouse gases emitted along with the manufacture of the final product in such a system, it is necessary to clarify product supply relationships among a plurality of companies. This is because it is difficult to correctly calculate the total amount of greenhouse gases emitted in a plurality of steps unless the relationships among a plurality of products constituting the final product are clear. Information such as the total amount of greenhouse gases emitted along with the manufacture of the final product, that is, information obtained by tracing the process from the manufacture of raw materials, components, etc. to the manufacture of the final product using the raw materials, components, etc. will be referred to as "traceability information".

For example, the unit of the amount of greenhouse gases emitted along with manufacture of a product may vary depending on at least one of the company and the product. In order to calculate the amount of greenhouse gases emitted along with manufacture of a product, it is necessary to integrate the amounts of greenhouse gases emitted along with manufacture of components or materials used in the manufacture of the product. Therefore, when the units of the amounts of greenhouse gas emissions are different between the components or materials and the product manufactured by using the components or materials, it is necessary to convert the unit of the amount of greenhouse gases emitted for the components or materials into the unit of the amount of greenhouse gases emitted for the product.

A conversion coefficient used for unit conversion reflects how a product serving as a component or material manufactured by an upstream company is used. Therefore, the conversion coefficient may be handled as confidential information in the upstream company. In the supply chain, it is not desirable to disclose the conversion coefficient even in the case of, for example, clarifying the product supply relationships among the companies in order to calculate the amount of greenhouse gases emitted along with the manufacture of the final product.

In one aspect of the present disclosure, the conversion coefficient is stored in a storage area that only an account of a corresponding company is authorized to access. For example, when calculating the total amount of greenhouse gases emitted along with the manufacture of the final product, the conversion coefficient may be used in the calculation process, but is not output or disclosed. Thus, the conversion coefficient is concealed from other companies.

More specifically, one aspect of the present disclosure relates to an information processing device including a control unit. The information processing device is, for example, a server device or a user terminal. Examples of the user terminal include a personal computer (PC), a smartphone, and a tablet terminal. The control unit is a processor such as a central processing unit (CPU), a graphics processing unit (GPU), or a digital signal processor (DSP).

The control unit receives a conversion coefficient input from an account of a downstream company in a supply chain out of an upstream company that manufactures a first product and the downstream company that manufactures a second product by using the first product. The conversion coefficient is a coefficient to be used for converting a value expressed in a first unit and obtained from traceability information on the first product into a value expressed in a second unit used for a value obtained from traceability-related information on the second product. The control unit stores the conversion coefficient in a first storage area for which access authority is invested only in the account of the downstream company. The control unit converts a first value expressed in the first unit and obtained from the traceability information on the first product into a second value expressed in the second unit by using the conversion coefficient. The control unit outputs a fourth value indicating first information included in traceability information on the second product that is obtained by integrating the second value and a third value obtained from the traceability-related information on the second product.

In the supply chain, "upstream" and "downstream" are determined depending on the flow of products. For example, when a first company manufactures a first product and a second company manufactures a second product by using the first product, the first company is an upstream company and the second company is a downstream company. When there is a third company that manufactures a third product by using the second product, the relationship between the second company and the third company is such that the second company is an upstream company and the third company is a downstream company. That is, focusing on certain hierarchical levels in the supply chain, the company positioned on the upstream side is referred to as "upstream company", and the company positioned on the downstream side is referred to as "downstream company". The most downstream company is a company that assembles a final product (OEM).

The first product is a product of the upstream company, and is also referred to as "upstream product". The second product is a product of the downstream company, and is also referred to as "downstream product". The first product is a material, a raw material, a component, etc. for the second product. The second product may be the final product. The traceability information is obtained by tracing the process from the manufacture of raw materials, components, etc. to the manufacture of a predetermined product using the raw materials, components, etc., and is transferred from the upstream product to the downstream product. The first information included in the traceability information is any of, for example, a carbon footprint of products (CFP) value, a recycling rate, and a score indicating a degree of fulfillment of due diligence (DD) information. The CFP value is the amount of greenhouse gases emitted along with manufacture of a product. The traceability-related information is used to acquire the traceability information, and is measured or acquired in a manufacturing process for a predetermined product. The traceability-related information is not transferred to the downstream company.

When the first information is the CFP value, traceability information on a predetermined product includes CFP values generated until the manufacture of the predetermined product. In this case, the traceability-related information on the predetermined product is a CFP value measured in a manufacturing process for the product in a company that manufactures the predetermined product. The value obtained from the traceability information on the first product is a CFP value generated from the manufacture of the most upstream product to the manufacture of the first product. The third value obtained from the traceability-related information on the second product is a CFP value measured in a manufacturing process for the second product in the downstream company that manufactures the second product. The fourth value indicating the first information included in the traceability information on the second product is a CFP value generated from the manufacture of the most upstream product to the manufacture of the second product.

When the first information is the recycling rate for a predetermined raw material, the traceability information on the predetermined product includes, for example, the total amount of the predetermined raw material used from the manufacture of the most upstream product to the manufacture of the predetermined product, and the recycling rate of the predetermined raw material used until the manufacture of the predetermined product. In this case, the traceability-related information on the predetermined product can be regarded as, for example, the total amount and the recycling rate, the amount of a recycled material, or the amount of a non-recycled material in the predetermined raw material used in the manufacturing process for the product in the company that manufactures the predetermined product. The first value obtained from the traceability information on the first product is, for example, the total amount of the predetermined raw material used from the manufacture of the most upstream product to the manufacture of the first product. The third value obtained from the traceability-related information on the second product is the total amount of the predetermined raw material used in the manufacturing process for the second product in the downstream company that manufactures the second product. The fourth value indicating the first information included in the traceability information on the second product is, for example, a recycling rate obtained by dividing the amount of the recycled material in the predetermined raw material used from the manufacture of the most upstream product to the manufacture of the second product by the total amount of the predetermined raw material used from the manufacture of the most upstream product to the manufacture of the second product.

When the first information is the recycling rate for the predetermined raw material, the traceability information and the traceability-related information on the predetermined product are not limited to these. For example, the traceability information on the predetermined product may include the total amount of the predetermined raw material used from the manufacture of the most upstream product to the manufacture of the predetermined product, and the amount of the recycled material in the predetermined raw material used from the manufacture of the most upstream product to the manufacture of the predetermined product instead of the recycling rate. In this case, the traceability-related information on the predetermined product may include the total amount and the amount of the recycled or non-recycled material in the predetermined raw material used in the manufacturing process for the product in the company that manufactures the predetermined product. The first value obtained from the traceability information on the first product includes, for example, two values that are the total amount and the amount of the recycled material in the predetermined raw material used from the manufacture of the most upstream product to the manufacture of the first product. The third value obtained from the traceability-related information on the second product includes two values that are the total amount and the amount of the recycled material in the predetermined raw material used in the manufacturing process for the second product in the downstream company that manufactures the second product.

When the first information is the score indicating the degree of fulfillment of the DD information, the traceability information on the predetermined product includes, for example, a score indicating the degree of fulfillment of DD information on the predetermined product, and an aggregate value of DD information from the manufacture of the most upstream product to the manufacture of the predetermined product. The DD information used to calculate the score indicating the degree of fulfillment of the DD information includes, for example, information on the amount of the predetermined raw material used from the manufacture of the most upstream product to the manufacture of the predetermined product, and a smelter of the raw material. In this case, the traceability-related information on the predetermined product is, for example, the DD information on the predetermined product.

In the one aspect of the present disclosure, the conversion coefficient for converting the value obtained from the traceability information on the first product of the upstream company from the first unit to the second unit is stored in the first storage area. The second unit is used for the value obtained from the traceability-related information on the second product of the downstream company. For the first storage area, the access authority is invested only in the account of the downstream company. Thus, companies other than the downstream company cannot access the conversion coefficient, and the conversion coefficient can be concealed. In the one aspect of the present disclosure, the fourth value is output, but the conversion coefficient is not output. The fourth value is a result of calculation using the conversion coefficient, and indicates the first information included in the traceability information on the second product. Therefore, the conversion coefficient can be concealed from the other companies.

In the one aspect of the present disclosure, the control unit may store the traceability information on the second product in a second storage area for which access authority is invested only in the account of the downstream company and an account of a third company. The third company manufactures a third product by using the second product.

The traceability information on the second product is stored in the second storage area. Thus, the traceability information on the second product can be transferred to the third company while being concealed from companies other than the third company. Although the traceability information on the second product is stored in the second storage area, the conversion coefficient is not stored. Therefore, the conversion coefficient can be concealed from the third company.

In this case, the control unit may acquire the traceability information on the first product from a third storage area for which access authority is invested only in an account of the upstream company and the account of the downstream company. The conversion coefficient is not stored in the third storage area. Therefore, the conversion coefficient can be concealed from the first company as well.

In the one aspect of the present disclosure, the control unit may store the traceability information on the second product in a fourth storage area. For the fourth storage area, access authority is invested only in the account of the third company that manufactures the third product by using the second product, and writing authority is invested in the account of the downstream company by the account of the third company.

Since the fourth storage area cannot be accessed from accounts other than the account of the third company, the traceability information on the second product can be transferred to the third company while being concealed from companies other than the third company. Although the traceability information on the second product is stored in the fourth storage area, the conversion coefficient is not stored. Therefore, the conversion coefficient can be concealed from the third company.

In this case, the control unit may acquire the traceability information on the first product from the first storage area for which writing authority is invested in the account of the upstream company by the account of the downstream company. The upstream company has the writing authority for the first storage area, but does not have the access authority. Therefore, the upstream company can write the traceability information on the first product to the first storage area, but cannot read the conversion coefficient. Thus, the conversion coefficient can be concealed from the first company as well.

Each of the first to fourth storage areas may be created, for example, in a storage unit of the information processing device or in a storage device other than that of the information processing device. Each of the first to fourth storage areas may be constructed by a distributed database such as a blockchain.

In the one aspect of the present disclosure, when the second product is the final product, the control unit may transmit the fourth value indicating the first information included in the traceability information on the second product to a terminal associated with the account of the downstream company. Therefore, the fourth value indicating the first information included in the traceability information on the second product, that is, the final product is output, but the conversion coefficient is not output. Thus, the conversion coefficient can be concealed.

Specific embodiments of the present disclosure will be described below with reference to the drawings. The hardware configuration, module configuration, functional configuration, etc. described in each embodiment are not intended to limit the technical scope of the disclosure to these configurations unless otherwise specified.

First Embodiment

An information processing system according to a first embodiment provides information on products supplied by a supply chain including a plurality of companies. The information on products is typically information on traceability. The companies belonging to the supply chain may be determined as appropriate based on attributes of products etc.

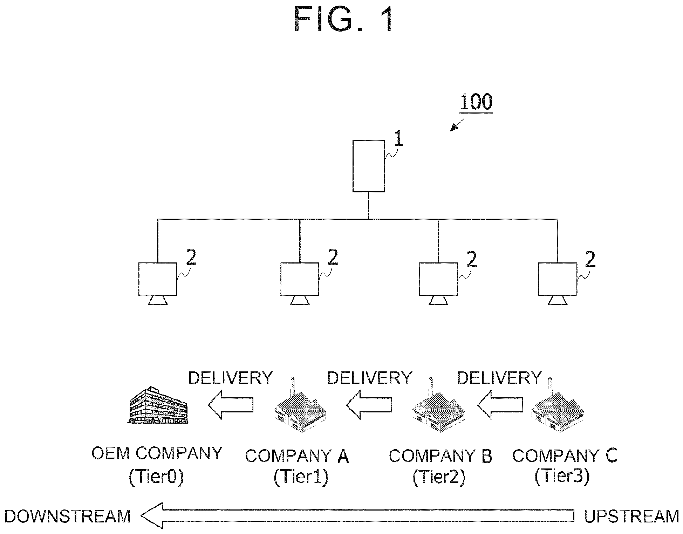

FIG. 1 shows an example of the system configuration of an information processing system 100. FIG. 1 also shows an example of a supply chain according to the first embodiment. The supply chain shown in FIG. 1 is constituted by an OEM company and a plurality of supplier companies. In the example of FIG. 1, a supply chain for manufacturing an automobile or a product related to the automobile, such as a battery, is assumed. The OEM company assembles a final product. The supplier companies (companies A to C) supply components, materials, assemblies, etc. for manufacturing the final product. The supplier companies each produce one or more products and deliver the products to a company positioned one level lower. The companies repeat this process, and the final product is obtained in the final step (i.e., the OEM company).

In the hierarchical levels of the supply chain of the first embodiment, the side that delivers a product will be referred to as "upstream side", and the side that purchases the product and produces a new product will be referred to as "downstream side". A company positioned on the upstream side will herein be referred to as "upstream company", and a company positioned on the downstream side will herein be referred to as "downstream company". A product produced by the upstream company will be referred to as "upstream product", and a product produced by the downstream company will be referred to as "downstream product". The downstream product incorporates the upstream product. In the present embodiment, the hierarchical levels in the supply chain will be referred to as "tiers". Tier 0 is the lowest level (corresponding to the OEM company) at which the final product is assembled. Transition is made to the upstream side in the order of Tiers 1, 2, and 3. The downstream company may turn into an upstream company depending on the level of interest. For example, the company B positioned in Tier 2 is a downstream company in relation to Tier 3, but is an upstream company in relation to Tier 1. Thus, the definitions of the upstream company and the downstream company may vary from level to level.

The information processing system 100 includes a server device 1 and a plurality of company terminals 2. The company terminals 2 are associated with the companies constituting the supply chain. Any number of terminals may be associated with each company. Terminals associated with a target company may include a terminal of a company (e.g., an agency company) that performs operations related to the target company.

The server device 1 collects pieces of information for generating a product tree described later from the company terminals 2, and generates the product tree based on the collected pieces of information. The server device 1 can execute a traceability-related process (typically a process for calculating the amount of carbon dioxide emission) based on the generated product tree. The result of execution of the process can be transmitted to the company terminals 2.

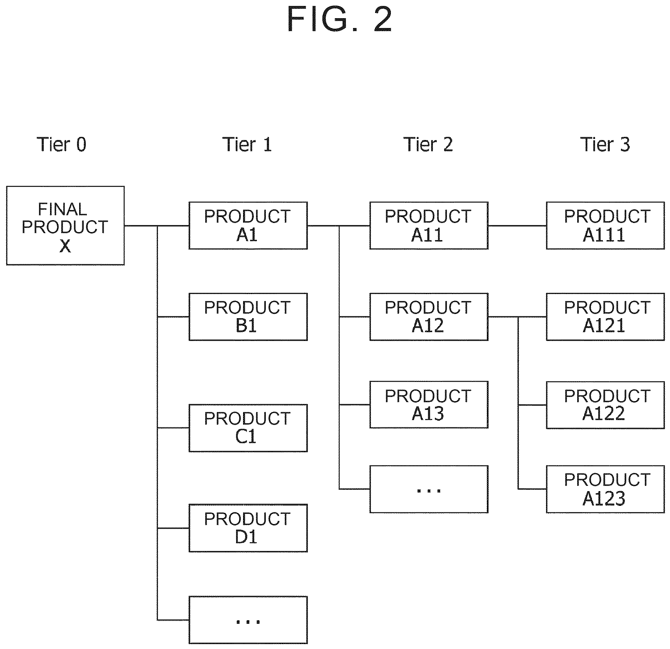

FIG. 2 shows an example of the product tree. The product tree is a tree diagram showing relationships among products supplied by the supply chain. In the example shown in FIG. 2, supply relationships among a plurality of products constituting a final product X are represented by a tree diagram. In the example shown in FIG. 2, the final product X is produced by assembling products A1, B1, C1, D1, etc. The product A1 is produced by assembling products A11, A12, A13, etc. In this way, the relationships among the products constituting the final product can be represented by a tree diagram in which the individual products serve as nodes.

The server device 1 according to the first embodiment collects pieces of information on products produced by the companies (hereinafter referred to as "product information") and information for linking the pieces of product information from terminals associated with the companies (company terminals 2), and generates the product tree based on these pieces of information. The product information includes information on traceability (e.g., information on the amount of greenhouse gas emissions; hereinafter referred to as "traceability-related information"). A carbon footprint etc. can be traced by tracing the product tree.

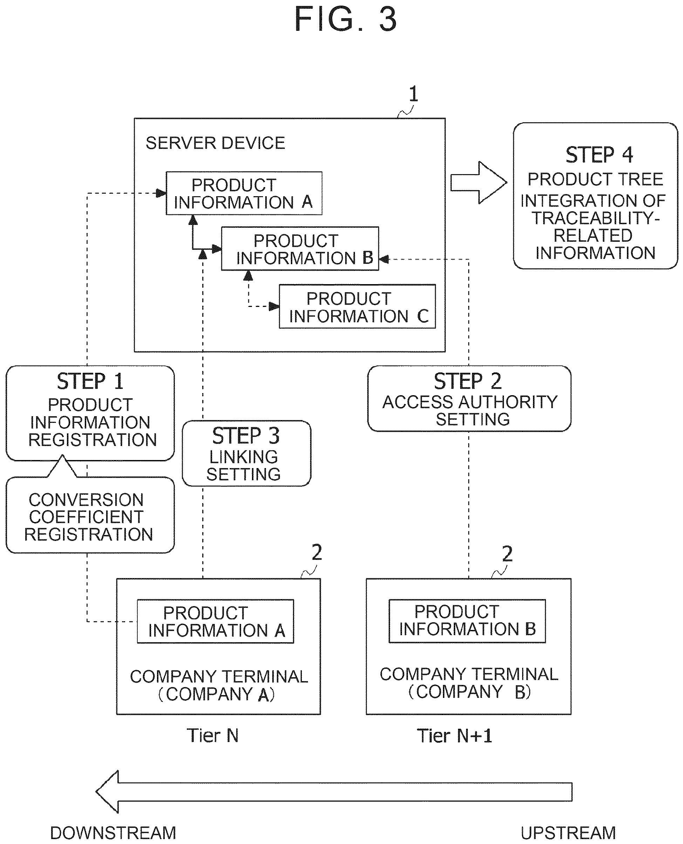

FIG. 3 shows an example of a flow of a process to be performed in the information processing system 100. In the example shown in FIG. 3, it is assumed that a downstream company A and an upstream company B are present at any hierarchical levels. It is assumed that the company B produces a product B and delivers it to the company A, and the company A produces a product A by using the product B. That is, in the example shown in FIG. 3, the product B is a child node of the product A on the product tree.

In step 1, the company terminal 2 associated with each company transmits and registers product information on a product produced by the company to the server device 1. In the example shown in FIG. 3, the company terminal 2 associated with the company A transmits product information on the product A (referred to as "product information A") to the server device 1. Similarly, the company terminal 2 associated with the company B transmits product information on the product B (referred to as "product information B") to the server device 1. The product information of each company is stored in the server device 1.

In step 2, the company terminal 2 associated with each company sets access authority for a company that discloses product information of that company. If all the products in the supply chain and all the pieces of information on the products are presented, the confidentiality will be lost for information on the companies constituting the supply chain and information on the products produced by the companies. Further, it may be inappropriate to disclose the entire product tree to one supplier. The server device 1 permits reference from the downstream company within a range of the invested authority.

In step 3, the company terminal 2 associated with each company sets linking between the pieces of product information stored in the server device 1. In one example, a representative person of a downstream company logs into the server device 1 from the company terminal 2 by using an account of the downstream company, and selects an upstream product to be linked with a downstream product that is the in-house product. In this way, the pieces of product information are linked from the downstream product to the upstream product. The server device 1 links the pieces of product information with each other based on the selection.

In step 4, the server device 1 generates a product tree, and outputs traceability information on the final product by integrating pieces of traceability information on the upstream products used in the manufacture of the final product and traceability-related information on the final product. The server device 1 generates the product tree by tracing the linking of the pieces of product information. The traceability information is obtained by tracing the product tree from upstream to downstream. The traceability-related information is measured or acquired in a company.

In the example shown in FIG. 3, the company terminal 2 associated with the upstream company B transmits, to the server device 1, an instruction request (information) to "invest the company A with authority to access the product information B". When a linking request is received from the company terminal 2 associated with the company A, the server device 1 provides only a list of product information that the company A is authorized to access, and prompts the company A to make selection for product information to be linked. When the company terminal 2 associated with the company A requests reference to the product tree, the server device 1 provides the company terminal 2 with the product tree in which information other than the information that the company A is authorized to access is concealed. Thus, the information on irrelevant companies and products can be concealed.

For example, the server device 1 acquires traceability information on a designated product in response to a request from the company terminal 2. In the example shown in FIG. 3, it is assumed that the product A is manufactured by using the product B. It is also assumed that the product B is manufactured by using a product C. In this case, traceability information on the product A is acquired by integrating traceability-related information on the product A measured in the company A and traceability information on the product B transferred from the company B. Traceability information on the product B is acquired by integrating traceability-related information on the product B measured in the company B and traceability information on the product C transferred from a company C. In the first embodiment, both the traceability information and the traceability-related information are CFP values. The traceability-related information is a CFP value measured in the company in the manufacture of the in-house product. Traceability information on a predetermined product is a CFP value obtained by integrating a CFP value measured in manufacture of the predetermined product and traceability information on an upstream product transferred from an upstream company.

For example, the unit of a value obtained from the traceability-related information on the product A may be different from the unit of a value obtained from the traceability information on the product B. In this case, it is necessary to convert the unit of the value obtained from the traceability information on the product B into the unit of the value obtained from the traceability-related information on the product A. That is, the server device 1 cannot acquire the traceability information on the product A unless the conversion coefficient is used.

In such a case, the company terminal 2 associated with the company A transmits the conversion coefficient to the server device 1. The server device 1 stores the conversion coefficient in a storage area that can be concealed from other companies. When calculating the traceability information, the server device 1 performs the calculation by using the conversion coefficient and outputs the result, but does not disclose the conversion coefficient.

The order of execution of processes such as registration of product information, setting of authority to access product information, setting of linking between pieces of product information, generation of a product tree, calculation of traceability information, and registration of a conversion coefficient is not limited to the example shown in FIG. 3. These processes may be executed independently. For example, the setting of linking may be performed later on product information registered earlier.

Device Configurations

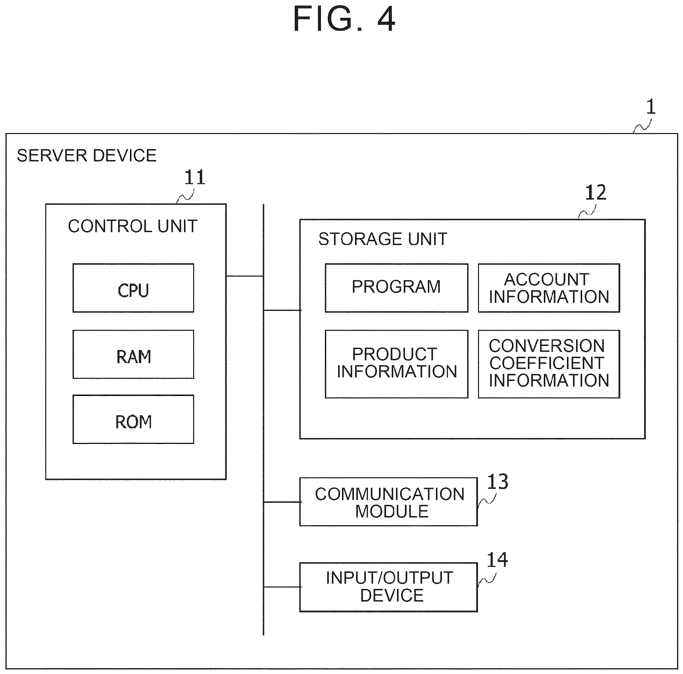

Next, the hardware configurations of the devices constituting the system will be described. FIG. 4 schematically shows an example of the hardware configuration of the server device 1 according to the first embodiment. The server device 1 is a computer including a control unit 11, a storage unit 12, a communication module 13, and an input/output device 14.

The server device 1 may be a computer including a processor (e.g., a CPU or a GPU), a main storage device (e.g., a random access memory (RAM) or a read only memory (ROM)), and an auxiliary storage device (e.g., an erasable programmable read only memory (EPROM), a hard disk drive, or a removable medium). An operating system (OS), various programs, various tables, etc. are stored in the auxiliary storage device. The programs stored in the auxiliary storage device are executed such that various functions (software modules) can be implemented to meet a predetermined purpose as described later. Some or all of the functions may be implemented as hardware modules by a hardware circuit such as an application specific integrated circuit (ASIC) or a field programmable gate array (FPGA).

The control unit 11 is an arithmetic unit that implements various functions of the server device 1 by executing a predetermined program. The control unit 11 can be implemented by, for example, a hardware processor such as a CPU. The control unit 11 may include a RAM, a read only memory (ROM), a cache memory, etc.

The storage unit 12 is means for storing information, and is constituted by a storage medium such as a RAM, a magnetic disk, or a flash memory. The storage unit 12 stores programs to be executed by the control unit 11, data to be used by the programs, etc. A database is constructed in the storage unit 12 and stores pieces of product information collected from the company terminals 2 and pieces of account information related to the companies. Details will be described later.

The communication module 13 is a communication interface for connecting the server device 1 to a network. The communication module 13 may include, for example, a network interface board and a wireless communication interface for wireless communication. The server device 1 can perform data communication with other computers (e.g., the company terminals 2) via the communication module 13.

The input/output device 14 is means for receiving an input operation performed by an operator and presenting information to the operator. Specifically, the input/output device 14 includes input devices such as a mouse and a keyboard, and output devices such as a display and a speaker. The input/output device may be an integrated device such as a touch panel display.

In the specific hardware configuration of the server device 1, any component may be omitted, replaced, or added as appropriate depending on embodiments. For example, the control unit 11 may include a plurality of hardware processors. The hardware processor may be a microprocessor, an FPGA, a GPU, etc. The input/output device 14 may be omitted, or an input/output device other than the illustrated one (e.g., an optical drive) may be added. The server device 1 may be constituted by a plurality of computers. In this case, the hardware configurations of the computers may or may not agree with each other.

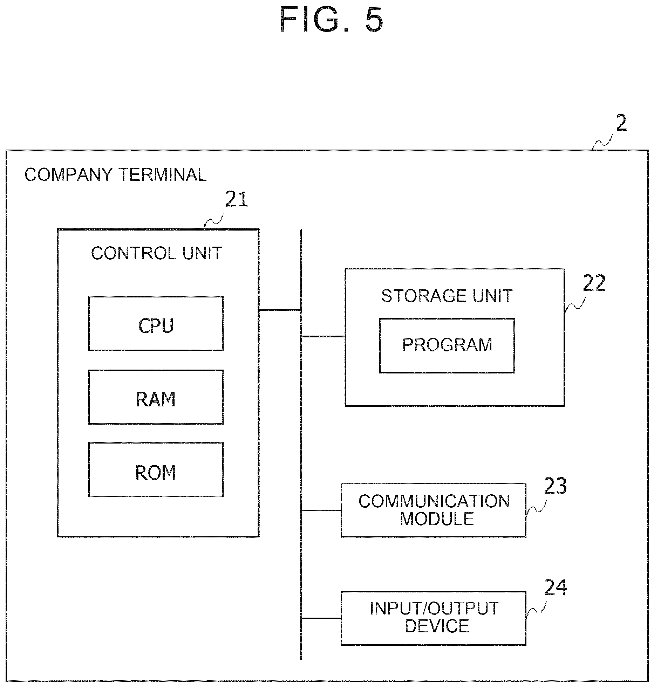

FIG. 5 schematically shows an example of the hardware configuration of the company terminal 2 according to the first embodiment. The company terminal 2 is a computer including a control unit 21, a storage unit 22, a communication module 23, and an input/output device 24.

Similarly to the server device 1, the company terminal 2 may be a computer including a processor (e.g., a CPU or a GPU), a main storage device (e.g., a RAM or a ROM), and an auxiliary storage device (e.g., an EPROM, a hard disk drive, or a removable medium). Some or all of the functions (software modules) may be implemented as hardware modules by a hardware circuit such as an ASIC or an FPGA.

The control unit 21 is an arithmetic unit that implements various functions (software modules) of the company terminal 2 by executing a predetermined program. The control unit 21 can be implemented by, for example, a hardware processor such as a CPU. The control unit 21 may include a RAM, a ROM, a cache memory, etc.

The storage unit 22 is means for storing information, and is constituted by a storage medium such as a RAM, a magnetic disk, or a flash memory. The storage unit 22 stores programs to be executed by the control unit 21, data to be used by the programs, etc.

The communication module 23 is a communication interface for connecting the company terminal 2 to a network. The communication module 23 may include, for example, a network interface board and a wireless communication interface for wireless communication. The company terminal 2 can perform data communication with other computers (e.g., the server device 1) via the communication module 23.

The input/output device 24 is means for receiving an input operation performed by an operator and presenting information to the operator. Specifically, the input/output device 24 includes input devices such as a mouse and a keyboard, and output devices such as a display and a speaker. The input/output device may be an integrated device such as a touch panel display.

In the specific hardware configuration of the company terminal 2, any component may be omitted, replaced, or added as appropriate depending on embodiments similarly to the server device 1.

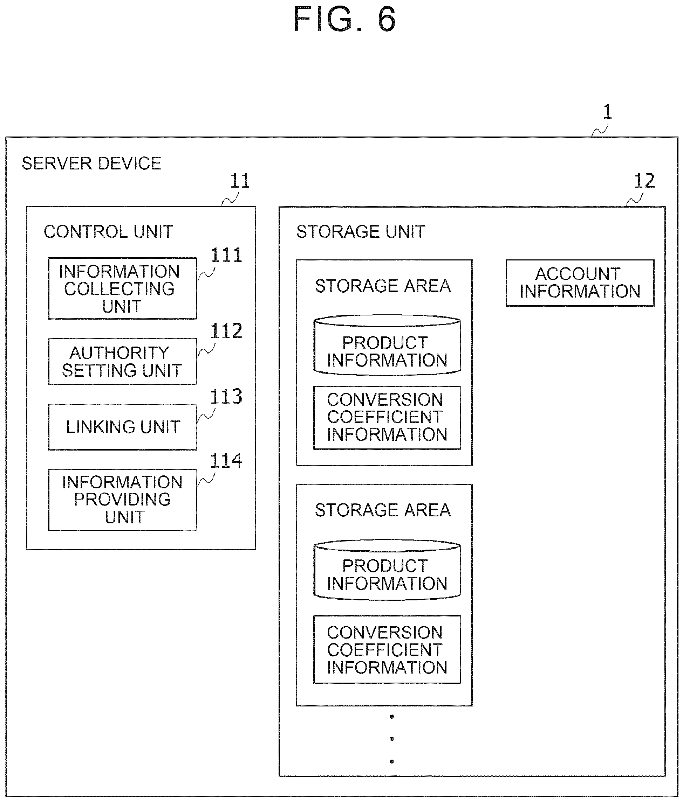

Next, the software configurations of the devices constituting the system will be described. FIG. 6 schematically shows the software configuration of the server device 1 according to the first embodiment. In the first embodiment, the control unit 11 includes four software modules that are an information collecting unit 111, an authority setting unit 112, a linking unit 113, and an information providing unit 114. The software modules may be implemented by the control unit 11 (CPU) executing programs stored in the storage unit 12. Information processing to be executed by the information collecting unit 111, the authority setting unit 112, the linking unit 113, and the information providing unit 114 is synonymous with information processing to be executed by the control unit 11.

The information collecting unit 111 executes a process for receiving product information transmitted from the company terminal 2 and storing the product information in the storage unit 12. The authority setting unit 112 receives information for setting authority to access the product information (hereinafter referred to as "permission information") from the company terminal 2. The authority setting unit 112 executes a process for setting authority to access the product information stored in the storage unit 12 based on the received information.

The linking unit 113 acquires information for linking pieces of product information from the company terminal 2 by interacting with the company terminal 2. The linking unit 113 executes a process for writing information indicating a linking relationship for the pieces of product information stored in the storage unit 12 based on the acquired information. The linking unit 113 executes a process for receiving a request to assign termination information and, in response to the request, assigning the termination information to the product information stored in the storage unit 12. A product tree is formed by reflecting the linking and termination. That is, the product tree is formed by saving the linking information and the termination information in the storage unit 12. The linking unit 113 generates the product tree based on results of the linking and termination.

In the first embodiment, the linking unit 113 receives a conversion coefficient from the company terminal 2 and registers it in the storage unit 12. The conversion coefficient is used to convert the unit of a value obtained from traceability information on an upstream product in an upstream company into the same unit as that of a value obtained from traceability-related information of a downstream product linked to the upstream product. The conversion coefficient is stored in a secure storage area that only the downstream company to which the company terminal 2 belongs is authorized to access.

The information providing unit 114 executes information processing related to the product tree and outputs a result of executing the information processing. The information processing related to the product tree may include a process for performing calculation on traceability of the product tree. The output of the result of executing the information processing may include a process for providing information on the generated product tree to the company terminal 2. In one example, the information providing unit 114 generates information on the product tree and calculates traceability information on a product based on the generated product tree.

In the first embodiment, the storage unit 12 includes a plurality of logical storage areas. Different access authorities can be set in the storage areas, such as an area that the company A is authorized to access, an area that the company B is authorized to access, and an area that both the companies A and B are authorized to access. The authority setting unit 112 sets the access authority by storing the product information received from the company terminal 2 in an appropriate storage area. A specific processing method will be described later.

The storage unit 12 stores account information. In the first embodiment, an operator of each company logs into the server device 1 via the company terminal 2 by using an account of the corresponding company to perform interaction between the server device 1 and the company terminal 2. The account information is information on an account associated with each company constituting the supply chain. The login using an account is an example of access to the server device 1 as a corresponding company. The method for accessing the server device 1 is not limited to such an example, and may be selected as appropriate depending on embodiments.

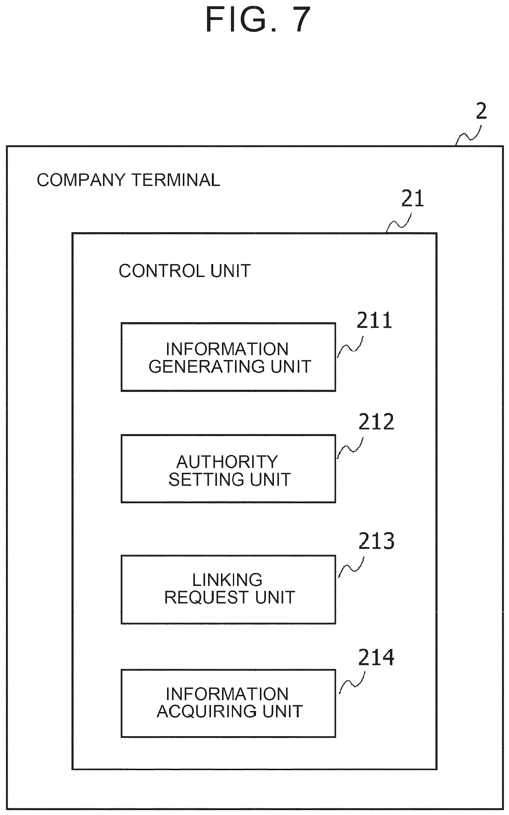

FIG. 7 schematically shows the software configuration of the company terminal 2 according to the first embodiment. In the first embodiment, the control unit 21 includes four software modules that are an information generating unit 211, an authority setting unit 212, a linking request unit 213, and an information acquiring unit 214. The software modules may be implemented by the control unit 21 (CPU) executing programs stored in the storage unit 22. Information processing to be executed by the information generating unit 211, the authority setting unit 212, the linking request unit 213, and the information acquiring unit 214 is synonymous with information processing to be executed by the control unit 21.

The information generating unit 211 generates information on a product of a company associated with the company terminal 2 (product information), and transmits it to the server device 1. The authority setting unit 212 receives a user operation for disclosure permission setting that is input, for example, via a disclosure permission setting screen. Identification information of a disclosure destination company, identification information of a product to be disclosed, and information indicating an item to be disclosed are received in addition to the user operation for disclosure permission setting.

The authority setting unit 212 generates permission information when the user operation for disclosure permission setting is received. The permission information includes identification information of the company associated with the company terminal 2, and the identification information of the disclosure destination company, the identification information of the product to be disclosed, and the information indicating the item to be disclosed that are received together with the user operation for disclosure permission setting. The identification information of the company in the permission information may be a company name or a company identifier. The identification information of the product to be disclosed may be, for example, a product number. The information indicating the item to be disclosed may be, for example, an item name or an item identifier. The authority setting unit 212 transmits a disclosure permission setting request and the permission information to the server device 1.

The linking request unit 213 transmits, to the server device 1, a request to link the in-house product information transmitted to the server device 1 to an upstream product. Together with the request, a pair of an identifier of the linking source in-house product (downstream product) and an identifier of the linking destination upstream product is transmitted to the server device 1. In response to this, the server device 1 can link the pieces of product information. Information on the linking source downstream product and the linking destination upstream product is input by, for example, a user operation via a linking destination setting screen described later.

In the first embodiment, the linking request unit 213 receives, for example, by a user operation input via a conversion coefficient registration screen described later, a request to register a conversion coefficient for converting the unit of a value indicated by traceability information on an upstream product into the unit used for a value obtained from traceability-related information on a downstream product. The linking request unit 213 transmits a conversion coefficient registration request to the server device 1. Conversion coefficient information including an identifier of the upstream product, an identifier of the downstream product, the conversion coefficient, and the type of information whose unit will be converted by the conversion coefficient is transmitted together with the request. When the conversion coefficient registration request is received, the linking unit 113 of the server device 1 registers the identifier of the upstream product, the identifier of the downstream product, the conversion coefficient, and the type of information whose unit will be converted by the conversion coefficient in the storage unit 12 as the conversion coefficient information. For example, the conversion coefficient may be set successively after the setting of product information linking, or may be set by selecting a downstream product for which the linking has been set independently of the setting of product information linking.

The information acquiring unit 214 requests the server device 1 to provide the product tree and outputs the information transmitted from the server device 1.

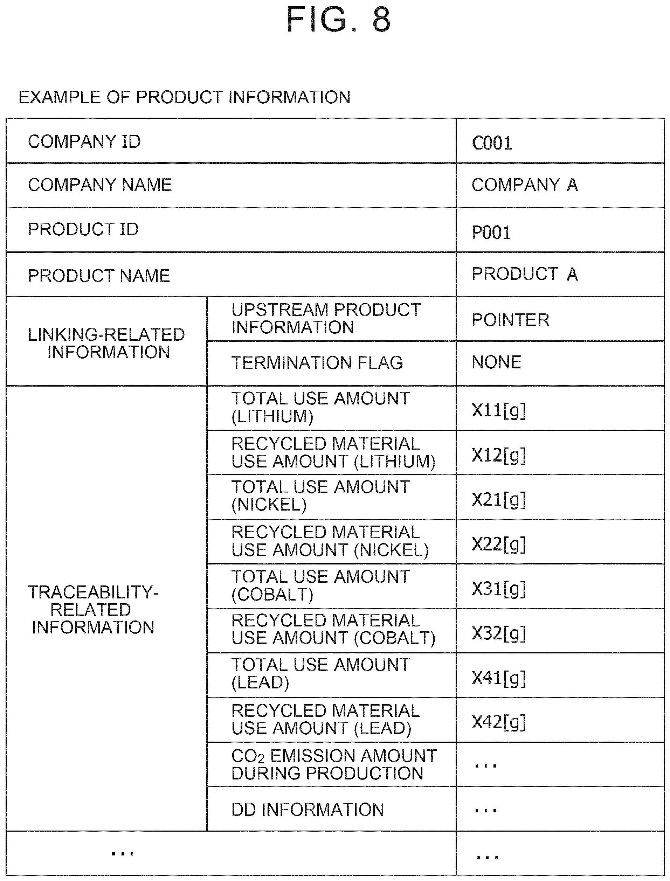

FIG. 8 shows an example of product information. The product information may be received from the company terminal 2 or may be input via the operator of the server device 1. In the example shown in FIG. 8, the product information includes fields for a company identifier (ID), a company name, a product ID, and a product name. The company ID field stores an identifier of a company that produces a target product. The company name field stores a name of the company that produces the target product. The product ID field stores an identifier of the target product. The product name field stores a name of the target product.

The product information further includes linking-related information. The linking-related information is information for identifying an upstream product linked to the target product. In the first embodiment, the linking-related information includes fields for "upstream product information" and "termination flag".

The upstream product information field stores information for identifying product information associated with the upstream product linked to the target product (i.e., a product necessary for producing the target product and incorporated in the target product). That is, the upstream product information field functions as a pointer to the upstream product linked to the target product.

The termination flag field stores a flag indicating whether the target product is a leaf node in the product tree, that is, a node positioned at the terminal end of the most upstream side. For example, a value "1" in the termination flag field indicates that the target product is a node positioned at the terminal end of the product tree. For example, a value "0" in the termination flag field indicates that the target product is not the node positioned at the terminal end of the product tree.

When a value is stored in the upstream product information field, the termination flag field exhibits "0". When the termination flag field exhibits "1", the upstream product information field is blank. The values in the upstream product information field and the termination flag field are, for example, received from the company terminal 2 or input by the operator of the server device 1. When the target product is manufactured by using a plurality of upstream products, the product information on the target product includes linking-related information for each upstream product.

The information providing unit 114 identifies an upstream product from linking-related information in the product information on the final product, and then refers to linking-related information in product information on the upstream product to identify the next upstream product. The information providing unit 114 generates a product tree for the final product by tracing the linking-related information in this way. When the termination flag is "1", the information providing unit 114 determines that the product tree ends with that product.

The product information further includes traceability-related information. In one example, the traceability-related information may include amounts of materials (e.g., upstream products) used per production volume of the product, information on a recycling rate of a predetermined raw material used in the manufacturing process for the product in the company of interest, an amount of greenhouse gases emitted when producing the product, due diligence information, or a combination thereof. Examples of the predetermined raw material include lithium, nickel, cobalt, lead, and graphite. The recycling rate may be expressed directly or may be expressed indirectly, for example, by a combination of the total use amount and the amount of use of the recycled material. The due diligence information (DD information) includes the amount of a raw material contained in a product containing a target raw material (e.g., cobalt, natural graphite, lithium, or nickel), a smelter, etc. in technical documentation showing that the company fulfills "responsible mineral sourcing obligations" for that product. The DD information serving as one element of the traceability-related information may be a score (percentage, proportion, etc.) indicating the degree to which the obligations are fulfilled. These values are measured in the company of interest and associated with the process of producing the target product.

In the example shown in FIG. 8, the traceability-related information in the product information A stores the total amount of lithium, nickel, cobalt, and lead used in the manufacturing process for the product A, the amounts of use of the recycled materials, the amount of greenhouse gases emitted in the production activities for the product A, and due diligence information (DD information) on the product A. The traceability-related information in the product information A does not include information on the processes up to the production of the upstream product (e.g., an amount of greenhouse gases emitted until the upstream product B is produced).

The traceability-related information may be selected as appropriate depending on embodiments. In one example, the amount of greenhouse gas emissions (carbon footprint) may include emissions in scope 1, scope 2, and scope 3. Scope 1 may cover an amount of direct greenhouse gas emissions. Scope 2 may cover an amount of indirect emissions along with the use of electricity, heat, and steam supplied by other companies. Scope 3 may cover an amount of indirect emissions other than the those in scope 1 and scope 2.

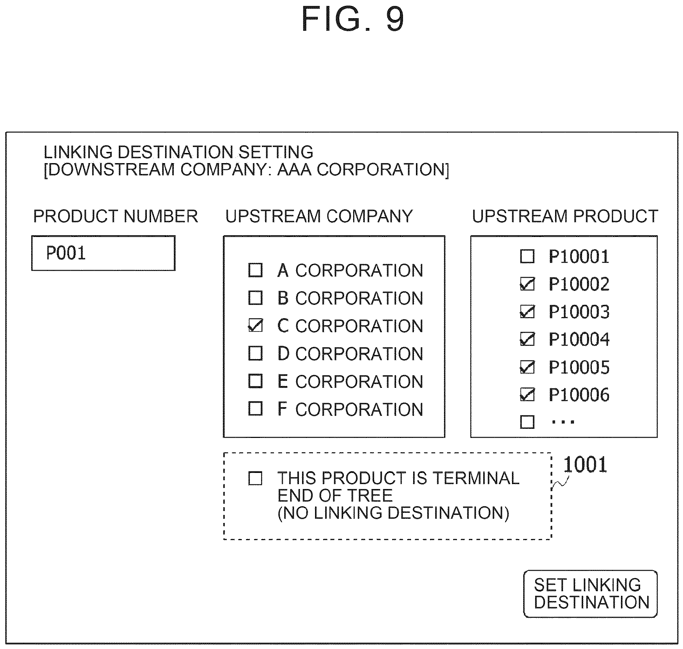

FIG. 9 shows an example of the linking destination setting screen of the company terminal 2. The linking destination setting screen shown in FIG. 9 includes a product number of a linking source in-house product (downstream product), a list of linking destination upstream companies, a list of upstream products, a checkbox for setting the downstream product as the terminal end of the tree, and a linking destination setting button.

The list of upstream companies includes, for example, companies that have records of transaction with the company associated with the company terminal 2 (downstream company) in the past. When an upstream company is selected in the list of upstream companies, a list of products of the selected upstream company that have records of transaction with the company associated with the company terminal 2 in the past is displayed as the list of upstream products.

When the target downstream product is the terminal end of the tree, that is, there is no upstream product to be linked to the target downstream product, this fact can clearly be indicated, for example, by marking the checkbox represented by reference numeral 1001 in FIG. 9. In this case, pieces of product information are not linked, and the server device 1 sets the termination flag of the corresponding product information to "1" (see FIG. 8). When an upstream product is selected, the checkbox is not displayed or cannot be selected.

When a user operation is made to select the linking destination setting button, a request for linking with the upstream product, an identifier of the target downstream product, an identifier of the upstream product, or the termination flag is input to the linking request unit 213. When the input is received, the linking request unit 213, for example, displays the conversion coefficient registration screen described later or transmits the request for linking with the upstream product to the server device 1.

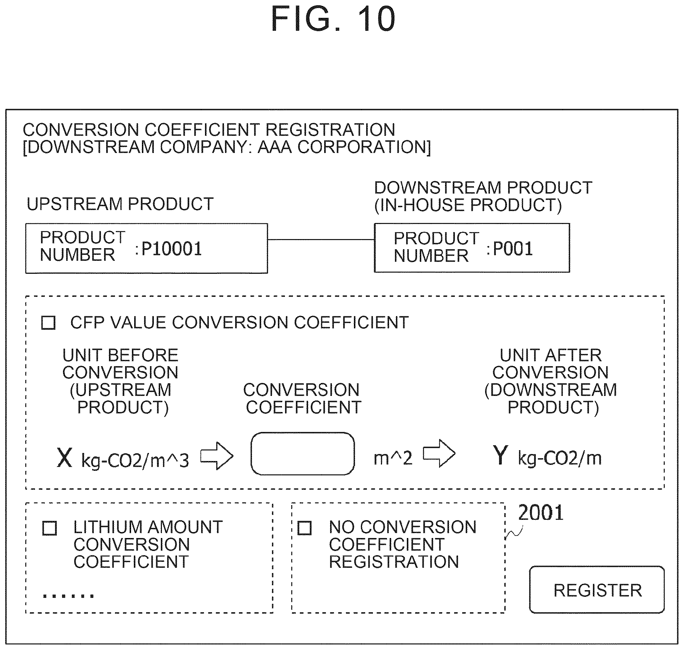

FIG. 10 shows an example of the conversion coefficient registration screen of the company terminal 2. The conversion coefficient registration screen is displayed, for example, when the linking destination setting button is selected on the linking destination setting screen. Alternatively, the conversion coefficient registration screen may be displayed, for example, when conversion coefficient setting is selected on a menu screen.

The conversion coefficient registration screen is displayed on the company terminal 2 associated with a downstream company. The conversion coefficient registration screen shown in FIG. 10 includes a display field for information on a target upstream product, a display field for information on a target downstream product, input fields for conversion coefficients for pieces of traceability-related information, a check button to indicate that there is no registration of a conversion coefficient, and a registration button.

The upstream product and the downstream product displayed on the conversion coefficient registration screen are, for example, the products selected on the linking destination setting screen (FIG. 9) displayed immediately before or on a selection screen for the upstream product and the downstream product. Product numbers are displayed in the display fields for information on the upstream product and the downstream product.

The input fields for conversion coefficients for pieces of traceability-related information include, for example, an input field for a conversion coefficient for the amount of $CO_2$ emissions (CFP value), and an input field for a conversion coefficient for the amount of use of a predetermined raw material. In the example shown in FIG. 10, the input field for a conversion coefficient for each piece of traceability-related information includes the unit used in the upstream product before conversion, the unit used in the downstream product after conversion, and a conversion coefficient input box. The value of the conversion coefficient may be determined in advance, for example, in negotiation between the upstream company and the downstream company.

FIG. 10 shows an example of a conversion coefficient of a CFP value as one element of the traceability-related information. In FIG. 10, "kg/m^3" (amount of $CO_2$ (kg) per cubic meter for the upstream product) is used as the unit of the CFP value for the upstream product. For the downstream product, "kg/m" (amount of $CO_2$ (kg) per meter for the downstream product) is used as the unit of the CFP value. The conversion coefficient of the CFP value is a coefficient for converting the CFP value of the upstream product expressed in the amount of $CO_2$ (kg) per cubic meter into the CFP value expressed in the amount of $CO_2$ (kg) per meter.

The amount of use of a predetermined raw material serving as one element of the traceability-related information is used, for example, to acquire a recycling rate and DD information. For example, when the upstream product and the downstream product have different shapes as in a case where the upstream product has a sheet shape and the downstream product has a granular shape, the units indicating the amount of the predetermined raw material may be different. For example, it is assumed that the upstream product has a sheet shape and "g/m" (amount of lithium contained per meter for the upstream product) is used as the unit indicating the amount of the predetermined raw material. It is assumed that the downstream product has a granular shape and "g/kg" (amount of lithium contained per kilogram for the downstream product) is used as the unit indicating the amount of the predetermined raw material. In such a case, the conversion coefficient of the amount of the predetermined raw material is a coefficient for converting the unit of the amount of the predetermined raw material for the upstream product into the unit used in the downstream product.

Marking a checkbox represented by reference numeral 2001 in FIG. 10 indicates that there is no unit conversion for any traceability-related information between the target upstream product and the target downstream product.

When the registration button is selected, a user operation for requesting registration of the conversion coefficients is input to the linking request unit 213. In response to this, the linking request unit 213 transmits a conversion coefficient registration request to the server device 1.

For example, when the conversion coefficient registration screen in FIG. 10 is displayed subsequently to the linking destination setting screen in FIG. 9 and the user operation for requesting registration of the conversion coefficients is input to the linking request unit 213 by selecting the registration button on the conversion coefficient registration screen, the linking request unit 213 transmits a request for linking with the upstream product and a conversion coefficient registration request to the server device 1. The linking destination setting screen shown in FIG. 9 and the conversion coefficient registration screen shown in FIG. 10 are examples, and they are not limited to the examples shown in FIGS. 9 and 10.

Configuration Example of Storage Areas

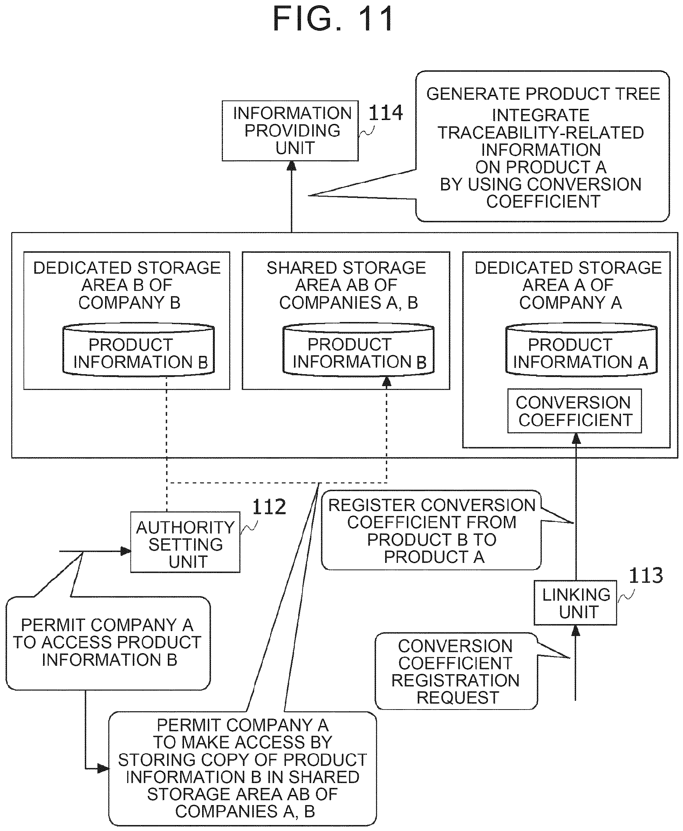

FIG. 11 shows an example of the configuration of storage areas of the storage unit 12. In the example shown in FIG. 11, a company A is a downstream company. A company B is an upstream company. A product A is produced by the company A. A product B is produced by the company B. Product information A is associated with the product A. Product information B is associated with the product B. In the example shown in FIG. 11, it is assumed that the company B sets disclosure permission for disclosing the product information B to the company A.

The product information B is held in a storage area that only the company B is authorized to access (hereinafter referred to as "storage area B"). A storage area that only a specific company is authorized to access will hereinafter be referred to as "dedicated storage area". The server device 1 is authorized to access dedicated storage areas of any companies. A phrase "having access authority for a predetermined storage area" means, for example, that viewing authority is invested to view information held in the storage area and writing authority is invested to write information to the storage area. The server device 1 reads information stored in the predetermined storage area and provides it only to an account having access authority (viewing authority) for the predetermined storage area. The server device 1 stores, in the predetermined storage area, only information related to an account having access authority (writing authority) for the predetermined storage area. At this time, the account of the company A does not have access authority for the dedicated storage area B of the company B. Therefore, the product information B stored in the storage area B is not disclosed to the company A.

Next, the authority setting unit 112 of the server device 1 receives a request from the company terminal 2 of the company B to set permission for the company A to access the product information B. Permission information including identification information of the disclosure source company B, identification information of the disclosure destination company A, the product B to be disclosed, and information indicating an item for which disclosure is permitted in the product information B is received together with the request to set the access permission. The request to set permission for the downstream company A to access the product information B is received from the company terminal 2 of the upstream company B, for example, in the following cases. A request to disclose the product information B is transmitted from the company terminal 2 of the downstream company A, and the operator of the company terminal 2 of the upstream company B gives a permission response to the disclosure request. The operator of the upstream company B inputs, to the company terminal 2 of the company B, setting to permit disclosure of the product information B to the company A.

In the first embodiment, the authority setting unit 112 copies the product information B stored in the storage area B to a storage area that both the companies A and B are authorized to access. Thus, the product information B is accessible to both the companies A and B and disclosed to the company A. The storage area that both the companies A and B are authorized to access will hereinafter be referred to as "shared storage area AB of companies A and B". The server device 1 is authorized to access the shared storage area AB of the companies A and B.

That is, in the first embodiment, the disclosure permission from the company B to disclose the product information B to the company A is set by storing the copy of the product information B in the shared storage area AB of the companies A and B. Items in the product information B other than the items for which disclosure is permitted in the permission information are excluded from the targets of copying from the dedicated storage area B of the company B to the shared storage area AB of the companies A and B.

In the first embodiment, the linking unit 113 of the server device 1 receives a conversion coefficient registration request from the company terminal 2, and stores received information on a conversion coefficient in a dedicated storage area of a company associated with the company terminal 2. In the example shown in FIG. 11, the linking unit 113 receives, from the company terminal 2 associated with the company A, a request to register a conversion coefficient for converting the unit of a value indicated by traceability information on the upstream product B into the unit of a value obtained from traceability-related information on the downstream product A, and stores information on the conversion coefficient in the dedicated storage area A of the company A.

At this time, the conversion coefficient is stored in none of, for example, the shared storage area AB of the companies A, B, the dedicated storage area B of the company B, dedicated storage areas of companies other than the companies A and B, and a shared storage area of the company B and a company other than the company A. Therefore, the conversion coefficient used by the company A is concealed from the companies other than the company A.

The information providing unit 114 generates information on a product tree based on the stored pieces of product information, and outputs the information on the product tree. The information providing unit 114 can generate an image showing a tree diagram based on the pieces of product information. When generating the information on the product tree, the information providing unit 114 can integrate pieces of traceability-related information registered for the pieces of product information, and output a result of the integration as traceability information on each product. When integrating the value indicated by the traceability information of the upstream product transferred from the upstream company and the value obtained from the traceability-related information of the downstream product measured by the downstream company, the units of the two values may be different from each other. In this case, the information providing unit 114 reads the conversion coefficient from the dedicated storage area of the downstream company, and uses the conversion coefficient to convert the unit of the value indicated by the traceability information on the upstream product into the unit of the value obtained from the traceability-related information of the downstream product. In that case, traceability information on the downstream product is output as a result of the integration, but the used conversion coefficient is not output.

The information providing unit 114 may generate the product tree in response to a request from the company terminal 2 and provide the product tree to the company terminal 2. It is inappropriate to disclose the entire product tree to a specific company. Therefore, when providing the product tree to the company terminal 2 associated with a certain company, the information providing unit 114 may perform a process for hiding a range in which the disclosure permission is not set for that company. Whether the disclosure permission is set is determined based on whether a shared storage area between a company that manufactures a target product and the company associated with the company terminal 2 that requests the product tree stores product information on the product.

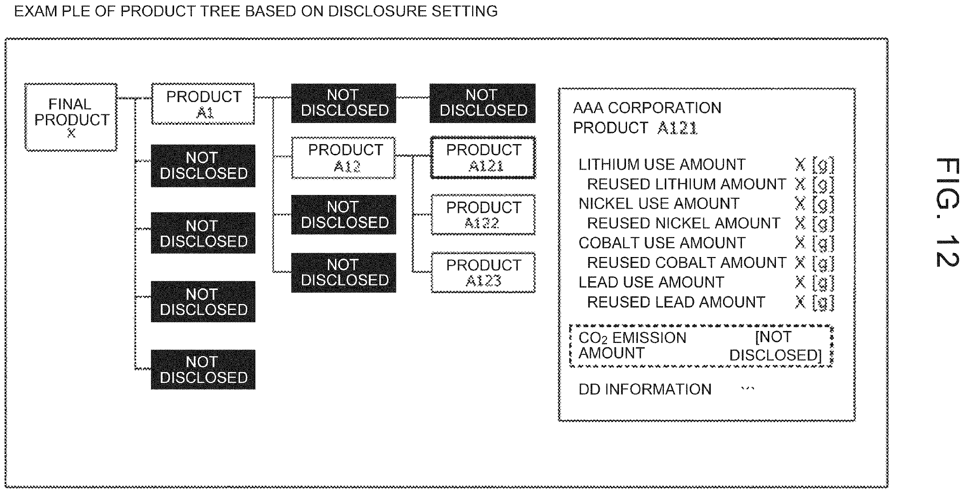

FIG. 12 shows an example of the product tree based on the disclosure permission setting. In the example shown in FIG. 12, products that the account of a company viewing the product tree is not authorized to access (has no disclosure permission) are displayed as "not disclosed" in the product tree. For the products that are not disclosed, detailed information or existence is concealed from the account of the viewing company.

The disclosure permission setting is not limited to the setting for the product, but may be setting for each item in the product information. In FIG. 12, an item for which the disclosure permission is not set is indicated by a dashed line. FIG. 12 shows that the amount of carbon dioxide emission when a product A121 is produced is hidden, and the amount is concealed. Even if the product tree includes products or items without access authority, the pieces of traceability information on the products are acquired without being affected by this. In the illustrated example, the amount of carbon dioxide emission for the product A121 is hidden, but the process of calculating the total amount of carbon dioxide emission for the product A12 is not affected.

Process for Integrating Pieces of Traceability-related Information

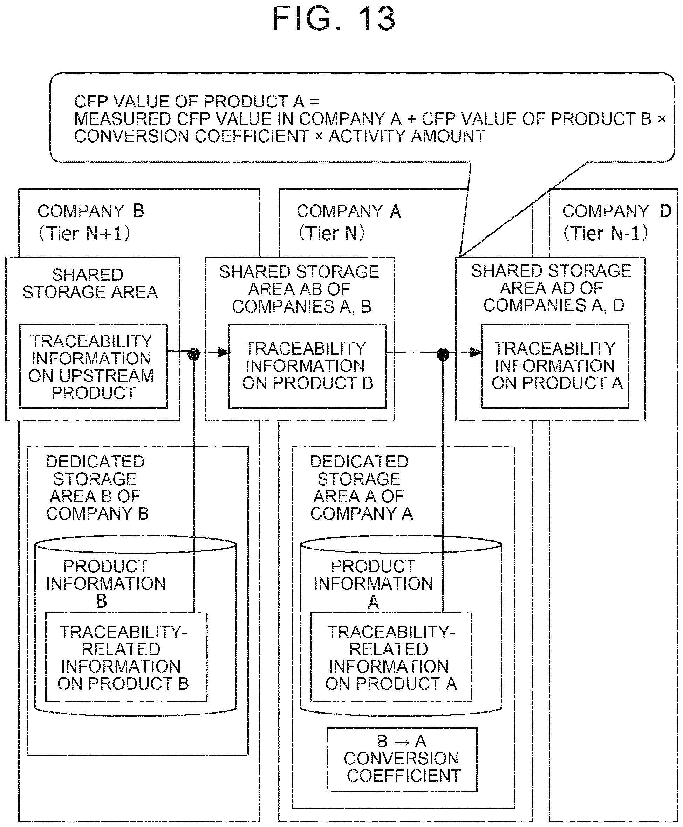

FIG. 13 illustrates an example of a process for integrating pieces of traceability-related information. In the example shown in FIG. 13, a company A is a Tier N downstream company. A company B is a Tier N+1 upstream company. A product A is produced by the company A. A product B is produced by the company B. Hereinafter, description will be given of a process in Tier N for integrating traceability information on the product B and traceability-related information on the product A to acquire traceability information on the product A.

In the first embodiment, the traceability information on the product B is transferred from the company B to the company A by being stored in a shared storage area AB of the companies A and B. In the example shown in FIG. 13, the upstream product for the product A is the product B. Therefore, the traceability information on the product A is acquired by integrating the traceability-related information on the product A and the traceability information on the product B. The traceability-related information on the product A is read from a dedicated storage area A of the company A.

When the traceability information on the product A is a CFP value, the traceability-related information on the product A and the traceability information on the product B are integrated as shown in Equation 1.

$$\text{CFP value of product A} = \text{measured CFP value of product A in company A} + \text{CFP value of}$$
$$\text{product B} \times \text{conversion coefficient} \times \text{activity amount} \qquad \text{(Equation 1)}$$

The activity amount is the amount of the product B used per unit production volume of the product A. The conversion coefficient from the CFP value of the product B to the CFP value of the product A is read from the dedicated storage area A of the company A. In Equation 1, the CFP value of the product A corresponds to the traceability information on the product A. The measured CFP value of the product A in the company A corresponds to the traceability-related information on the product A. The CFP value of the product B corresponds to the traceability information on the product B.

The traceability information (CFP value) on the product A is transferred to a company downstream of the product A. For example, assuming that a downstream company for the company A is a company D (Tier N-1), the traceability information (CFP value) on the product A is transferred to the company D by being stored in a shared storage area AD of the companies A and D. Assuming that a product of the company D is a product D, traceability information (CFP value) on the product D is acquired, similarly to the traceability information on the product A, by integrating traceability-related information (measured CFP value) on the product D and the traceability information (CFP value) on the product A.

By generalizing Equation 1, a CFP value of a product in Tier N is expressed by Equation 2.

$$\text{CFP value of product N (Tier N)} = \text{measured CFP value in Tier N company} + \Sigma_k \, (\text{CFP value}$$
$$\text{of product k (Tier N+1)} \times \text{conversion coefficient } C_k \text{ to product N (Tier N)} \times \text{activity amount}$$
$$U_k \text{ in product N (Tier N))} \qquad \text{(Equation 2)}$$

The symbol k represents a variable indicating an upstream product. Assuming that a product in Tier N is a product N and the product N is manufactured by using a plurality of products N+1 in Tier N+1, the variable k takes a value from "1" to the number of the products N+1 used to manufacture the product N. The conversion coefficient $C_k$ to the product N is a conversion coefficient for converting the unit of the CFP value of a k-th product N+1 into the unit of the CFP value of the product N. The activity amount $U_k$ in the product N is the amount of the k-th product N+1 used per unit production volume of the product N. For example, when the unit of the production volume of the product N is "piece", the activity amount $U_k$ in the product N is the amount of the k-th product N+1 used per piece of the product N. For example, when the unit of the production volume of the product N is "kilogram", the activity amount $U_k$ in the product N is the amount of the k-th product N+1 used per kilogram of the product N. The CFP value of the final product (most downstream product) can be acquired by sequentially executing the calculation of Equation 2 for the product in each tier in the order from the upstream product.

In Equation 2, the CFP value of the product N corresponds to traceability information on the product N. The measured CFP value in the Tier N company corresponds to traceability-related information on the product N. The CFP value of the product k (Tier N+1) corresponds to traceability information on the product k (Tier N+1).

The CFP value of the product N obtained through the process of integrating the pieces of traceability-related information may be stored in the storage unit 12 as a part of the product information on the product N or independently of the product information on the product N.

Regarding a predetermined raw material, the recycling rate of the product N is acquired by dividing the amount of a recycled material used until the manufacture of the product N by the total amount used until the manufacture of the product N. The total amount of the predetermined raw material used until the manufacture of the product N is the total amount of the recycled material and a non-recycled material in the predetermined raw material used until the manufacture of the product N. Hereinafter, the total use amount and the recycling rate in the manufacturing process for the product N measured in the Tier N company will be referred to simply as "total use amount in manufacture of product N" and "recycling rate in manufacture of product N". The amount of the recycled material and the total amount in the predetermined raw material used until the manufacture of the product N will be referred to simply as "recycled material use amount" and "total use amount" up to the product N. The recycling rate of the predetermined raw material included until the manufacture of the product N will be referred to simply as "recycling rate of product N". The recycling rate of the product N is expressed by Equation 3.

$$\text{Recycling rate of product N (Tier N)}$$

$$= \text{recycled material use amount up to product N} \div \text{total use amount up to product N}$$

$$= \{\text{total use amount in manufacture of product N} \times \text{recycling rate in manufacture of product}$$

$$\text{N} + \Sigma_k (\text{total use amount up to product k (Tier N+1)} \times \text{recycling rate of product k (Tier N+1)}$$

$$\times \text{conversion coefficient } C_k \text{ to product N (Tier N)} \times \text{activity amount } U_k \text{ in product N (Tier}$$

$$\text{N))}\} \div \{\text{total use amount in manufacture of product N} + \Sigma_k (\text{total use amount up to product k}$$

$$\text{(Tier N+1)} \times \text{conversion coefficient } C_k \text{ to product N (Tier N)} \times \text{activity amount } U_k \text{ in}$$

$$\text{product N (Tier N))}\} \qquad \text{(Equation 3)}$$

The units used for the total use amount up to the product N+1 and the total use amount in the manufacture of the product N may differ between the Tier N+1 company and the Tier N company. When determining the recycling rate of the product N, the conversion coefficient $C_k$ to the product N is a conversion coefficient for converting the unit of the total use amount up to the k-th product N+1 into the unit of the total use amount in the manufacture of the product N.

In Equation 3, the information transferred from the product N+1 in Tier N+1 to the product N in Tier N is the recycling rate of the product k (Tier N+1) and the total use amount up to the product k (Tier N+1). Therefore, in Equation 3, the traceability information on the product k (Tier N+1) corresponds to a set of the recycling rate of the product k (Tier N+1) and the total use amount up to the product k (Tier N+1). In Equation 3, the traceability-related information on the product N is a set of the total use amount in the manufacture of the product N and the recycling rate in the manufacture of the product N that are measured in the Tier N company. In this case, the traceability information on the product N that is transferred from the Tier N company to the downstream Tier N-1 company is a set of the recycling rate of the product N and the total use amount up to the product N.

The total use amount up to the product N in the denominator and the recycled material use amount up to the product N in the numerator in Equation 3 may be acquired and stored in the storage unit 12 as a part of or independently of the product information. When the predetermined raw material is not used in the manufacturing process for the product N in the Tier N company, both the total use amount in the manufacture of the product N and the recycling rate in the manufacture of the product N in Equation 3 are zero.

When determining the recycling rate of the product N, Equation 3-1 that is a modification of Equation 3 may be used.

Recycling rate of product N (Tier N)

= recycled material use amount up to product N ÷ total use amount up to product N

= {recycled material use amount in manufacture of product N + $\Sigma_k$ (recycled material use amount up to product k (Tier N+1) × conversion coefficient Ck to product N (Tier N) × activity amount Uk in product N (Tier N))} ÷ {total use amount in manufacture of product N + $\Sigma_k$ (total use amount up to product k (Tier N+1) × conversion coefficient Ck to product N (Tier N) × activity amount Uk in product N (Tier N))}        (Equation 3-1)

When the recycling rate of the product N is determined by using Equation 3-1, the information transferred from the product k in Tier N+1 to the product N in Tier N is the recycled material use amount up to the product k (Tier N+1) and the total use amount up to the product k (Tier N+ 1). Therefore, in Equation 3-1, the traceability information on the product k (Tier N+1) is the recycled material use amount up to the product k (Tier N+1) and the total use amount up to the product k (Tier N+ 1). In Equation 3-1, the traceability-related information on the product N is a set of the recycled material use amount and the total use amount in the manufacture of the product N.

When a score indicating the degree of fulfillment of DD information of the product N is determined according to a predetermined method, it is conceivable to, for example, regarding the amount of use of the predetermined raw material that is one element of the DD information, convert the unit of the amount of use of the predetermined raw material in the product N that is transferred from Tier N. In this case, the conversion coefficient Ck is a conversion coefficient for converting the unit of the amount of use of the predetermined raw material in the k-th product N+1 into the unit of the amount of use of the predetermined raw material contained in the product N. The method for calculating the score indicating the degree of fulfillment of DD information is not limited to a specific method. When the score indicating the degree of fulfillment of the DD information of the product N is determined, the traceability-related information on the product N is, for example, the DD information on the product N. When the score indicating the degree of fulfillment of the DD information of the product N is determined, for example, the traceability information on the product N+1 is a score indicating the degree of fulfillment of DD information on the product N+1 and an aggregate value of DD information up to the product N+1. When the score indicating the degree of fulfillment of the DD information of the product N is determined, the definitions of the traceability-related information on the product N and the traceability information on the product N+1 are not limited to the above, and depend on the method for calculating the score.

Processing Flows

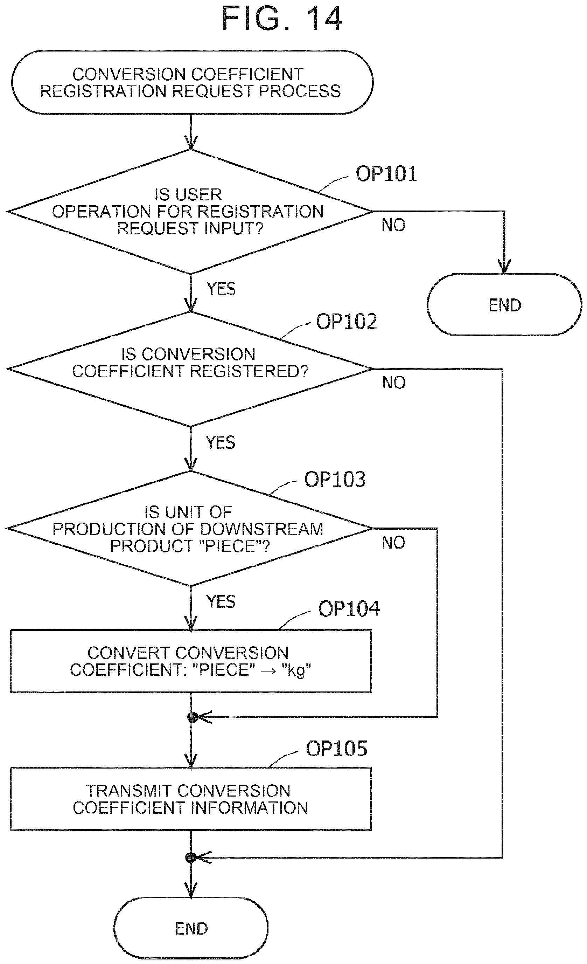

FIG. 14 is an example of a flowchart of a conversion coefficient registration request process to be performed by the company terminal 2. The process shown in FIG. 14 is repeatedly executed, for example, at a predetermined cycle. The main body of execution of the process shown in FIG. 14 is the control unit 21 of the company terminal 2. For convenience, the functional components will be described as the main body.

In OP 101, the linking request unit 213 determines whether a user operation for a conversion coefficient registration request is input via the conversion coefficient registration screen. Conversion coefficient information including an identifier of an upstream product, an identifier of a downstream product, and a conversion coefficient or information indicating that there is no conversion is input together with the conversion coefficient registration request. When the user operation for the conversion coefficient registration request is input (OP101: YES), the process proceeds to OP102. When the user operation for the conversion coefficient registration request is not input (OP101: NO), the process shown in FIG. 14 is terminated.

In OP 102, the linking request unit 213 determines whether a conversion coefficient is registered. When the conversion coefficient is registered (OP102: YES), the process proceeds to OP103. When the conversion coefficient is not registered (OP102: NO), the process shown in FIG. 14 is terminated.

In OP103, the linking request unit 213 determines whether the unit of production of the downstream product is "piece". When the unit of production of the downstream product is "piece" (OP103: YES), the process proceeds to OP104. When the unit of production of the downstream product is not "piece" (OP103: NO), the process proceeds to OP105.

The conversion coefficient input on the conversion coefficient registration screen is such a conversion coefficient that a CFP value after conversion is a value indicating the amount of $CO_2$ per piece of the downstream product. In OP104, the linking request unit 213 therefore further converts the input conversion coefficient so that the CFP value after conversion is a value indicating the amount of $CO_2$ per kilogram of the downstream product. The conversion coefficient after conversion is transmitted to the server device 1.

In OP 105, the linking request unit 213 transmits the conversion coefficient registration request to the server device 1. The conversion coefficient information is transmitted to the server device 1 together with the conversion coefficient registration request. When the conversion coefficient registration request is received, the server device 1 registers the conversion coefficient information in the storage unit 12. Then, the process shown in FIG. 14 is terminated.

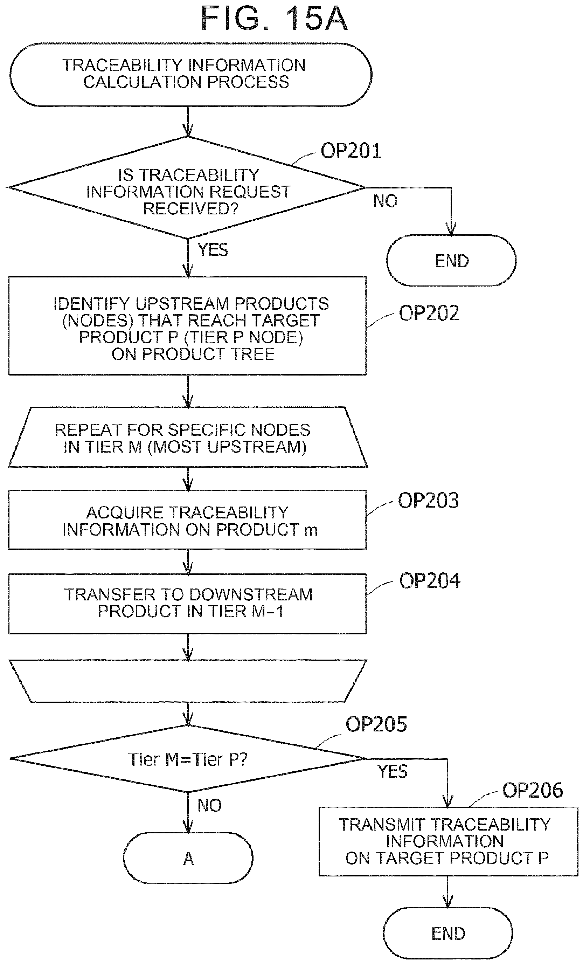

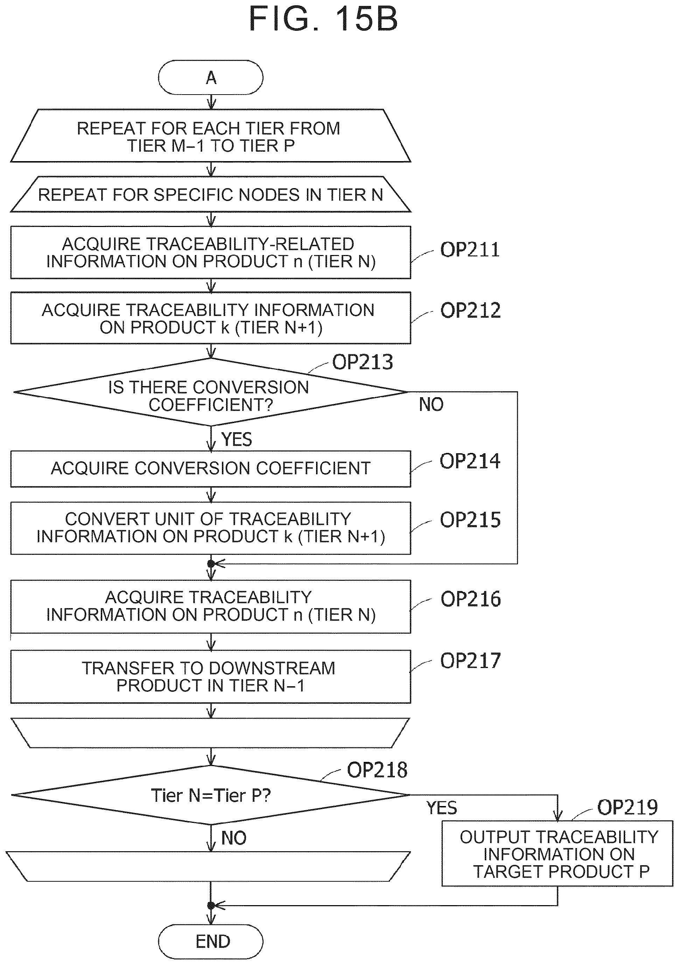

FIGS. 15A and 15B are an example of a flowchart of a traceability information calculation process to be performed by the server device 1. The process shown in FIG. 15A is repeatedly executed, for example, at a predetermined cycle. The main body of execution of the process shown in FIGS. 15A and 15B is the control unit 11 of the server device 1. For convenience, the functional components will be described as the main body. As a premise for the process in FIGS. 15A and 15B, it is assumed that, for example, a product tree with a predetermined product set as the final product is generated in response to a request from the company terminal 2 and is displayed on the company terminal 2. In FIGS. 15A and 15B, the traceability information to be acquired will be described without specifying, for example, a CFP value, a recycling rate, or a score indicating the degree of fulfillment of DD information. The traceability information to be acquired may include a plurality of elements out of the CFP value, the recycling rate, and the score indicating the degree of fulfillment of the DD information.

In OP201, the information providing unit 114 determines whether a traceability information acquisition request is received from the company terminal 2. For example, the traceability information acquisition request is transmitted from the information acquiring unit 214 of the company terminal 2 when one of the products in the product tree displayed on the company terminal 2 is selected by a user operation on the company terminal 2. For example, an identifier of the product whose traceability information is to be acquired is received together with the traceability information acquisition request. The product whose traceability information is to be acquired will be referred to as "product P".

When the traceability information acquisition request is received from the company terminal 2 (OP201: YES), the process proceeds to OP202. When the traceability information acquisition request is not received from the company terminal 2 (OP201: NO), the process shown in FIG. 15A is terminated.

In OP202, the information providing unit 114 identifies nodes associated with upstream products that reach a node associated with the target product P in tiers upstream of the node associated with the target product P on the product tree to identify the products to be subjected to the following process. The tier of the node associated with the target product will be referred to as "Tier P". It is assumed that the nodes identified in OP202 include the node associated with the target product P.

Next, the processes of OP203 and OP204 are executed for each of the nodes identified in OP202 among the nodes in most upstream Tier M on the product tree. The node to be subjected to the processes of OP203 and OP204 will be referred to as "node m", and a product associated with the node m will be referred to as "product m".

In OP203, the information providing unit 114 acquires traceability information on the product m. Since the product m is the most upstream product, traceability-related information on the product m is acquired as the traceability information on the product m.

In OP204, the information providing unit 114 transfers the traceability information on the product m to a downstream product in Tier M-1 relative to the product m. In the first embodiment, the traceability information on the product m is transferred in OP204 by being stored in a shared storage area between a company that manufactures the product m and a company that manufactures the downstream product in Tier M-1 relative to the product m.

When the process of OP204 is completed, the processes of OP203 and OP204 are executed with the target node m set to another node in Tier M among the nodes identified in OP202. When the processes of OP203 and OP204 are executed for all the nodes identified in OP202 in Tier M, the process proceeds to OP205.

In OP205, the information providing unit 114 determines whether Tier M is Tier P, that is, whether the node associated with the target product P is positioned in Tier M. When Tier M is Tier P (OP205: YES), the process proceeds to OP206. When Tier M is Tier P, traceability information on the target product P is acquired by repeating the processes of OP203 and OP204. In OP206, the information providing unit 114 therefore transmits the traceability information on the target product P to the company terminal 2. The company terminal 2 receives the traceability information on the target product P from the server device 1, and displays it, for example, on the display. Then, the process shown in FIG. 15A is terminated.

When Tier M is not Tier P (OP205: NO), the process proceeds to OP211 in FIG. 15B. The processes from OP211 to OP217 are executed for each of the nodes identified in OP202 among the nodes in each tier sequentially from Tier M-1 to Tier P on the product tree. Specifically, the processes from OP211 to OP217 are first executed sequentially for the nodes identified in OP202 in Tier M-1. Then, the processes from OP211 to OP217 are executed sequentially for the nodes identified in OP202 in Tier M-2. In this way, the processes from OP211 to OP217 are repeatedly executed until they are executed for all the nodes identified in OP202 in Tier P.

A tier to be subjected to the processes from OP211 to OP218 will be referred to as "Tier N", a node to be subjected to the processes will be referred to as "node n", and a product associated with the node n will be referred to as "product n". In OP211, the information providing unit 114 acquires traceability-related information on the product n.

In the first embodiment, the traceability-related information on the product n is acquired from a dedicated storage area of a company that manufactures the product n.

In OP212, the information providing unit 114 acquires traceability information on an upstream product k in Tier N+1 relative to the product n. In the first embodiment, the traceability information on the product k is acquired from a shared storage area between the company that manufactures the product n and a company that manufactures the product k.

In OP213, the information providing unit 114 determines whether there is a conversion coefficient related to the traceability information from the product k to the product n. This determination may be made by referring to conversion coefficient information in the storage unit 12, or by determining whether the unit of a value indicated by the traceability-related information on the product n is the same as the unit of a value obtained from the traceability information on the product k. When there is a conversion coefficient from the product k to the product n (OP213: YES), the process proceeds to OP214. When there is no conversion coefficient related to the traceability information from the product k to the product n (OP213: NO), the process proceeds to OP216.

In OP214, the information providing unit 114 acquires the conversion coefficient from the product k to the product n from the dedicated storage area of the company that manufactures the product n. In OP215, the information providing unit 114 converts the value obtained from the traceability information on the product k into a value in the unit used for the value indicated by the traceability-related information on the product n by using the conversion coefficient acquired in OP214. When there is a plurality of upstream products k in Tier N+1 relative to the product n, the processes from OP212 to OP215 are executed for each of the products k.

In OP216, the information providing unit 114 integrates the traceability-related information on the product n and the traceability information on the product k to acquire traceability information on the product n. The traceability-related information on the product n and the traceability information on the product k are integrated in the manner described above.

In OP217, the information providing unit 114 transfers the traceability information on the product n to a downstream product in Tier N-1 relative to the product n. In the first embodiment, the traceability information on the product n is transferred in OP217 by being stored in a shared storage area between the company that manufactures the product n and a company that manufactures the downstream product in Tier N-1 relative to the product n.

When the process of OP217 is completed for the node n, the processes of OP211 to OP217 are executed with the target node n set to another node in Tier N among the nodes identified in OP202. When the processes of OP211 to OP217 are executed for all the nodes identified in OP202 in Tier N, the process proceeds to OP218.

In OP218, the information providing unit 114 determines whether Tier N is Tier P, that is, whether the node associated with the target product P is positioned in Tier N.

When Tier N is not Tier P (OP218: NO), the information providing unit 114 sets Tier N-1 as new Tier N and executes the processes from OP211 to OP217 for each of the nodes identified in OP202 in Tier N.

When Tier N is Tier P (OP218: YES), the process proceeds to OP219. When Tier N is Tier P, the traceability information on the target product P is acquired by repeating the processes from OP211 to OP217 for all the nodes identified in OP202 in Tier N. In OP219, the information providing unit 114 therefore transmits the traceability information on the target product P to the company terminal 2. Then, the process shown in FIG. 15B is terminated. The processes shown in FIGS. 14, 15A, and 15B are examples, and the processes executed by the company terminal 2 and the server device 1 can be changed as appropriate depending on embodiments.

Actions and Effects of First Embodiment

In the first embodiment, the conversion coefficient for converting the unit of a value obtained based on the traceability information on the upstream product into the unit used for a value indicated by the traceability-related information on the downstream product is stored in the dedicated storage area of the downstream company that manufactures the downstream product. Although the conversion coefficient is used when acquiring the traceability information on the downstream product by integrating the traceability information on the upstream product and the traceability-related information on the downstream product, the conversion coefficient is not output. Thus, the conversion coefficient that is one type of confidential information can be concealed from other companies.

Second Embodiment

A second embodiment is different from the first embodiment in terms of the configuration of the storage areas. Therefore, the second embodiment is different from the first embodiment in terms of the method for transferring the traceability information on the upstream product to the downstream company. In the second embodiment, description in common with the first embodiment will be omitted. In the second embodiment, the system configuration of the information processing system 100, the hardware and software configurations of the server device 1, and the hardware and software configurations of the company terminal 2 are the same as those in the first embodiment.

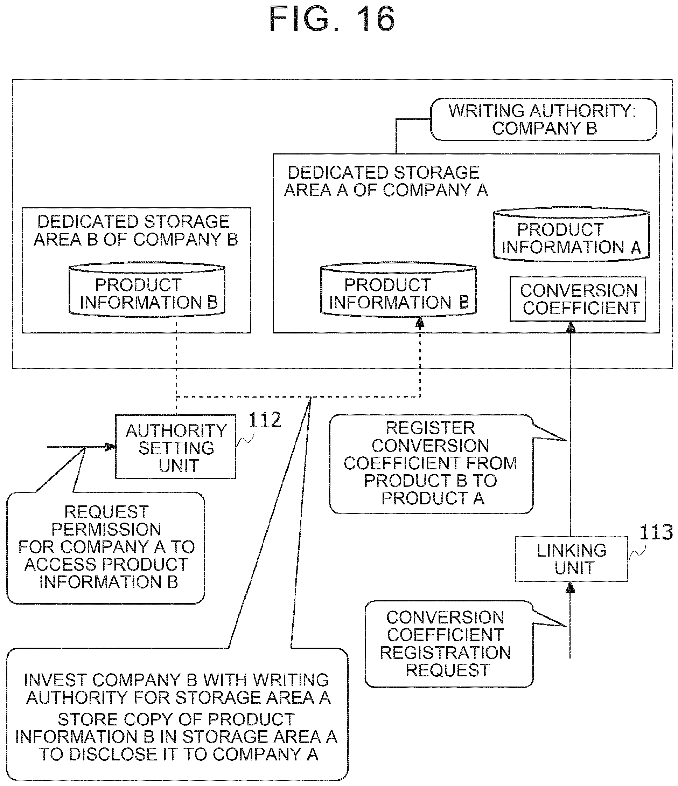

FIG. 16 shows an example of the configuration of the storage areas of the storage unit 12 according to the second embodiment. In the example shown in FIG. 16, a company A is a downstream company. A company B is an upstream company. A product A is produced by the company A. A product B is produced by the company B. Product information A is associated with the product A. Product information B is associated with the product B. In the example shown in FIG. 16, it is assumed that the company B sets disclosure permission for disclosing the product information B to the company A.

In the second embodiment, a storage area shared by two companies is not used. For example, when the authority setting unit 112 of the server device 1 receives a request from the company terminal 2 of the company B to set permission for the downstream company A to access the product information B on the upstream product B, the authority setting unit 112 copies the product information B stored in the dedicated storage area B of the upstream company B to the dedicated storage area A of the downstream company A. Thus, the account of the downstream company A can access the product information B on the upstream product B in the dedicated storage area A of the company A, and the product information B on the upstream product B is disclosed to the downstream company A.

When the account of the upstream company B does not have writing authority for the dedicated storage area A of the downstream company A, the authority setting unit 112 of the server device 1 cannot copy the product information B on the company B to the storage area A. Therefore, the authority setting unit 112 of the server device 1 invests the account of the upstream company B with the writing authority for the storage area A before copying the product information B to the storage area A.

Examples of the method for investing the account of the upstream company B with the writing authority for the dedicated storage area A of the downstream company A include the following method. The authority setting unit 112 issues a key for writing information to the dedicated storage area A of the downstream company A to the account of the upstream company B. The authority setting unit 112 uses the key to copy the product information B stored in the dedicated storage area B of the upstream company B to the dedicated storage area A of the downstream company A.

Similarly to the first embodiment, when the linking unit 113 of the server device 1 receives a conversion coefficient registration request from the company terminal 2, the linking unit 113 stores received conversion coefficient information in a dedicated storage area of a company associated with the company terminal 2. Similarly to the first embodiment, the information providing unit 114 generates a product tree based on pieces of product information stored in dedicated storage areas of the companies.

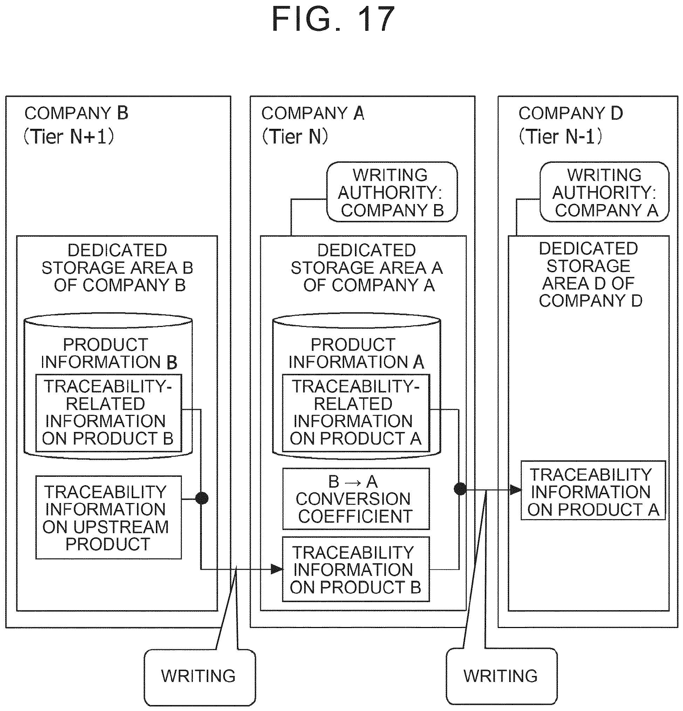

FIG. 17 shows an example of transfer of traceability information according to the second embodiment. In the example shown in FIG. 17, a company A is a Tier N downstream company. A company B is a Tier N+1 upstream company. A product A is produced by the company A. A product B is produced by the company B. A company D is a Tier N-1 company downstream of the company A.

In the second embodiment, the information providing unit 114 transfers the traceability information on the upstream product B from the upstream company B to the downstream company A by storing the traceability information on the upstream product B in the dedicated storage area A of the downstream company A. The information providing unit 114 acquires the traceability information on the product A by integrating, similarly to the first embodiment, the traceability-related information on the product A and the traceability information on the upstream product B that are stored in the dedicated storage area A of the downstream company A. At this time, the units of the pieces of information to be integrated are made uniform by using the conversion coefficient stored in the dedicated storage area A of the downstream company A.

The information providing unit 114 transfers the traceability information on the product A from the company A to the Tier N-1 company D downstream of the company A by storing the traceability information on the product A in a dedicated storage area D of the further downstream company D. By repeating this process up to the most downstream tier, the pieces of traceability information from the most upstream product to the final product are integrated, and the traceability information on the final product can be acquired.

Since the traceability information is transferred as described above in the second embodiment, the account of the upstream company is invested with writing authority for the dedicated storage area of the downstream company. The account of the upstream company is invested with the writing authority for the dedicated storage area of the downstream company by the authority setting unit 112, for example, when the linking between the upstream product and the downstream product is set or when the account of the downstream company is permitted to access the product information on the upstream product.

In the second embodiment as well, the conversion coefficient used when integrating the traceability information on the upstream product and the traceability-related information on the downstream product is stored in the dedicated storage area of the downstream company, and is not copied to the dedicated storage areas of the other companies. Therefore, the conversion coefficient is concealed from the other companies. The upstream company has the writing authority for the dedicated storage area of the downstream company to store the traceability information on the upstream product in the dedicated storage area of the downstream company, but is not invested with viewing authority. Since the account of the upstream company cannot view the conversion coefficient stored in the dedicated storage area of the downstream company, the conversion coefficient can be concealed from the upstream company.

Modifications of First Embodiment and Second Embodiment

In the first embodiment and the second embodiment, the server device 1 acquires the traceability information on the downstream product by integrating the traceability information on the upstream product and the traceability-related information on the downstream product. Instead, the company terminal 2 associated with the downstream company may acquire the traceability information on the downstream product by integrating the traceability information on the upstream product and the traceability-related information on the downstream product.

In this case, in the order from the upstream company in the product tree, the information providing unit 114 of the server device 1 transmits a request to the corresponding company terminal 2 to acquire traceability information on a product in the product tree, and transfers it to the next downstream company, thereby acquiring traceability information on a predetermined product. That is, in the first embodiment, the server device 1 performs the processes of OP203 and OP204 in FIG. 15A and the processes from OP211 to OP217 in FIG. 15B for each node in the product tree but, in the second embodiment, the information providing unit 114 of the server device 1 controls the company terminal 2 of the company that manufactures the product associated with each node to perform these processes.

When each company terminal 2 acquires the traceability information on the product of the corresponding company in this way, the server device 1 may transfer the traceability information on the product to the downstream company as in the first embodiment or the second embodiment by receiving the traceability information from the company terminal 2.

When the account of the upstream company is invested with the writing authority for the dedicated storage area of the downstream company and the product information and the traceability information on the upstream product are copied to the dedicated storage area of the downstream company as in the second embodiment, the company terminal 2 may directly copy the information to the dedicated storage area of the downstream company. In this case, access to the storage area of the downstream company is controlled, for example, by using an electronic certificate as described below.

For example, the authority setting unit 112 of the server device 1 or the authority setting unit 212 of the company terminal 2 of the downstream company requests a certificate authority to issue an electronic certificate to be given to the account of the upstream company. The electronic certificate may include a public key of the downstream company and an electronic signature for the public key. By receiving the electronic certificate from the account of the downstream company, the account of the upstream company can obtain the writing authority for the dedicated storage area of the downstream company.

The company terminal 2 of the upstream company uses the acquired electronic certificate (key) of the account of the downstream company to write the product information or the traceability information on the upstream product to the dedicated storage area of the downstream company. At this time, the company terminal 2 of the upstream company may encrypt the product information or the traceability information on the upstream product by using the public key in the electronic certificate, and write the encrypted information to the dedicated storage area of the downstream company. The downstream company can decrypt the written information by using a private key generated in association with the public key. The functional components to be executed vary depending on the written information. For example, when writing the product information on the upstream product to the dedicated storage area of the downstream company, the information generating unit 211 writes as described above. For example, when writing the traceability information on the upstream product to the dedicated storage area of the downstream company, the information acquiring unit 214 writes as described above.

Other Modifications

The embodiments described above are merely illustrative, and the present disclosure may be modified as appropriate without departing from the spirit and scope of the present disclosure. For example, the processes and means described in the present disclosure can be combined as desired as long as no technical contradiction occurs.

In the description of the embodiments, the server device 1 stores the product information in the database, but the product information may be stored by means other than the database.

The description of the embodiments is directed to the form in which the server device 1 completes the product tree by executing steps 1 to 4 (FIG. 3). However, the roles of the server device 1 may be distributed among a plurality of company terminals 2. For example, the product information may be stored in a distributed database using blockchain infrastructure. In this case, a plurality of company terminals 2 may construct the product information database. In this case, smart contracts may be used to execute the processes in the individual steps. For example, the process in step 2 (access authority setting) may be executed in response to writing of permission information to the database with an account of a certain company. The process in step 3 (linking setting) may be executed in response to writing of a linking request to the database with an account of a certain company.

The storage areas that store the pieces of product information may be distributed among a plurality of company terminals 2. In this case, the dedicated storage area of each company may be provided only in the company terminal 2 of the corresponding company. The shared storage area between a plurality of companies in the first embodiment may be distributed among a plurality of company terminals 2 related to sharing.

The setting of the authority to access the storage area may be implemented by the operating system of the server device 1 or by any other authentication system. For example, a public key cryptosystem may be used. When the system is implemented by using blockchain infrastructure, the access authority may be invested by using an electronic key.

In the above embodiments, the companies in the supply chain are described as companies that produce products. However, the companies in the supply chain need not be the companies that produce products. For example, companies that transport, import, store, or wholesale products may also be included in the companies constituting the supply chain. In one example, some of the companies may be companies that do not execute manufacturing processes, such as trading companies, sales agents, or import agents, and may receive products from companies positioned one level higher (upstream companies) and deliver the products to companies positioned one level lower (downstream companies).

In the above embodiments, the supply chain of automotive products is assumed, the OEM is described as the most downstream company, and the companies that supply components, materials, assemblies, etc. are described as the suppliers. However, the companies belonging to the supply chain are not necessarily limited to these companies. The company in each stage may be determined as appropriate depending on the product etc. The manufacturing activities performed by the companies until the final product is obtained may be determined as appropriate depending on embodiments, and may include all activities that can be performed until the final product is obtained, such as excavation, machining, assembling, transportation, and storage.

In the above embodiments, it is assumed that each company places an order for a certain material with one company. In the above embodiments, however, the order format of each company is not limited to such an example. At least a part of the companies belonging to the supply chain may place an order for the same product with a plurality of upstream companies and use the obtained upstream products selectively for the in-house product. In the example shown in FIG. 2, a product A11_1, a product A11_2, or a product A11_3 in Tier 2 may be used selectively for the product A1 in Tier 1. In this case, the server device 1 may hold the linking relationship for each pattern for use. In the above example, the server device 1 may hold pieces of linking information for the product A1 in Tier 1, such as a pattern 1 "product A11_1 in Tier 2, ...", a pattern 2 "product A11_2, ...", and a pattern 3 "product A11_3, ...". In response to this, the server device 1 may execute the calculation (integration) of the traceability information for each pattern. In one example, the server device 1 may output the calculation result for each pattern. In another example, the server device 1 may calculate, based on the calculation result, statistics such as a maximum value, a minimum value, an average value, a variance, a standard deviation, and a median of the calculation result, and output the calculated statistics.

The conversion coefficient may be disclosed to a designated company (e.g., a downstream company) when a company that has registered the conversion coefficient permits disclosure to the designated company. The conversion coefficient is disclosed to the designated company by copying conversion coefficient information of the conversion coefficient to a storage area shared with the designated company (first embodiment) or a dedicated storage area of the designated company (second embodiment).

The process described as being executed by a single device may be executed by a plurality of devices in cooperation. Alternatively, the process described as being executed by different devices may be executed by a single device. In a computer system, the hardware configuration (server configuration) that implements functions can be changed flexibly.

The present disclosure may be embodied such that a computer program that implements the functions described in the above embodiments is supplied to a computer and is read and executed by one or more processors of the computer. The computer program may be provided to the computer by being stored in a non-transitory computer-readable storage medium connectable to a system bus of the computer, or may be provided to the computer via a network. Examples of the non-transitory computer-readable storage medium include any types of disk or disc such as magnetic disks (e.g., a floppy (registered trademark) disk and a hard disk drive (HDD)) and optical discs (e.g., a compact disc ROM (CD-ROM), a digital versatile disc (DVD), and a Blu-ray disc), a read only memory (ROM), a random access memory (RAM), an EPROM, an electrically erasable programmable ROM (EEPROM), a magnetic card, a flash memory, an optical card, and any types of medium suitable to store electronic instructions.

**Claims**

1. An information processing device comprising a control unit (11, 21), wherein the control unit (11, 21) is configured to:

receive a conversion coefficient input from an account of a downstream company in a supply chain out of an upstream company that manufactures a first product and the downstream company that manufactures a second product by using the first product, the conversion coefficient being a coefficient for converting a value expressed in a first unit into a value expressed in a second unit, the value expressed in the first unit being obtained from traceability information on the first product, the second unit being used for a value obtained from traceability-related information on the second product;

store the conversion coefficient in a first storage area for which access authority is invested only in the account of the downstream company;

convert a first value expressed in the first unit and obtained from the traceability information on the first product into a second value expressed in the second unit by using the conversion coefficient; and

output a fourth value indicating first information, the first information being included in traceability information on the second product that is obtained by integrating the second value and a third value obtained from the traceability-related information on the second product in the downstream company.

2. The information processing device according to claim 1, wherein the first information included in the traceability information is any of a carbon footprint of products (CFP) value, a recycling rate, and a score indicating a degree of fulfillment of due diligence information.

3. The information processing device according to claim 1 or 2, wherein the control unit (11, 21) is configured to store the traceability information on the second product in a second storage area for which access authority is invested only in the account of the downstream company and an account of a third company that manufactures a third product by using the second product.

4. The information processing device according to claim 3, wherein the control unit (11, 21) is configured to acquire the traceability information on the first product from a third storage area for which access authority is invested only in an account of the upstream company and the account of the downstream company.

5. The information processing device according to claim 1 or 2, wherein the control unit (11, 21) is configured to store the traceability information on the second product in a fourth storage area for which access authority is invested only in an account of a third company that manufactures a third product by using the second product and writing authority is invested in the account of the downstream company by the account of the third company.

6. The information processing device according to claim 5, wherein the control unit (11, 21) is configured to acquire the traceability information on the first product from the first storage area for which writing authority is invested in an account of the upstream company by the account of the downstream company.

7. The information processing device according to any one of claims 1 to 6, wherein the control unit (11, 21) is configured to transmit the fourth value indicating the first information included in the traceability information on the second product to a terminal associated with the account of the downstream company.

8. An information processing method for executing, by a computer (1), a process comprising:

receiving a conversion coefficient input from an account of a downstream company in a supply chain out of an upstream company that manufactures a first product and the downstream company that manufactures a second product by using the first product, the conversion coefficient being a coefficient for converting a value expressed in a first unit into a value expressed in a second unit, the value expressed in the first unit being obtained from traceability information on the first product, the second unit being used for a value obtained from traceability-related information on the second product;

storing the conversion coefficient in a first storage area for which access authority is invested only in the account of the downstream company;

converting a first value expressed in the first unit and obtained from the traceability information on the first product into a second value expressed in the second unit by using the conversion coefficient; and

outputting a fourth value indicating first information, the first information being included in traceability information on the second product that is obtained by integrating the second value and a third value obtained from the traceability-related information on the second product in the downstream company.

9. The information processing method according to claim 8, wherein the first information included in the traceability information is any of a carbon footprint of products (CFP) value, a recycling rate, and a score indicating a degree of fulfillment of due diligence information.

10. The information processing method according to claim 8 or 9, further comprising storing, by the computer (1), the traceability information on the second product in a second storage area for which access authority is invested only in the account of the downstream company and an account of a third company that manufactures a third product by using the second product.

11. The information processing method according to claim 10, further comprising acquiring, by the computer (1), the traceability information on the first product from a third storage area for which access authority is invested only in an account of the upstream company and the account of the downstream company.

12. The information processing method according to claim 8 or 9, further comprising storing, by the computer (1), the traceability information on the second product in a fourth storage area for which access authority is invested only in an account of a third company that manufactures a third product by using the second product and writing authority is invested in the account of the downstream company by the account of the third company.

13. The information processing method according to claim 12, further comprising acquiring, by the computer (1), the traceability information on the first product from the first storage area for which writing authority is invested in an account of the upstream company by the account of the downstream company.

14. The information processing method according to any one of claims 8 to 13, further comprising transmitting, by the computer (1), the fourth value indicating the first information included in the traceability information on the second product to a terminal associated with the account of the downstream company.

15. A non-transitory storage medium storing instructions that cause the computer (1) to execute the information processing method according to any one of claims 8 to 14.

# FIG. 1

DELIVERY     DELIVERY     DELIVERY

OEM COMPANY    COMPANY A    COMPANY B    COMPANY C
(Tier0)    (Tier1)    (Tier2)    (Tier3)

DOWNSTREAM                                                  UPSTREAM

# FIG. 2

| Tier 0 | Tier 1 | Tier 2 | Tier 3 |
|---|---|---|---|

FINAL PRODUCT X

PRODUCT A1

PRODUCT B1

PRODUCT C1

PRODUCT D1

...

PRODUCT A11

PRODUCT A12

PRODUCT A13

...

PRODUCT A111

PRODUCT A121

PRODUCT A122

PRODUCT A123

# FIG. 3

SERVER DEVICE 1

PRODUCT INFORMATION A

PRODUCT INFORMATION B

PRODUCT INFORMATION C

STEP 4
PRODUCT TREE INTEGRATION OF TRACEABILITY-RELATED INFORMATION

STEP 1
PRODUCT INFORMATION REGISTRATION

CONVERSION COEFFICIENT REGISTRATION

STEP 3
LINKING SETTING

STEP 2
ACCESS AUTHORITY SETTING

PRODUCT INFORMATION A
COMPANY TERMINAL (COMPANY A)
Tier N

PRODUCT INFORMATION B
COMPANY TERMINAL (COMPANY B)
Tier N+1

DOWNSTREAM                                    UPSTREAM

# FIG. 4

1

SERVER DEVICE

11

CONTROL UNIT

CPU

RAM

ROM

12

STORAGE UNIT

| PROGRAM | ACCOUNT INFORMATION |
|---|---|
| PRODUCT INFORMATION | CONVERSION COEFFICIENT INFORMATION |

13

COMMUNICATION MODULE

14

INPUT/OUTPUT DEVICE

# FIG. 5

2

COMPANY TERMINAL

21

CONTROL UNIT

CPU

RAM

ROM

STORAGE UNIT

22

PROGRAM

COMMUNICATION MODULE

23

INPUT/OUTPUT DEVICE

24

# FIG. 6

SERVER DEVICE

1

11

CONTROL UNIT

INFORMATION
COLLECTING
UNIT

111

AUTHORITY
SETTING UNIT

112

LINKING UNIT

113

INFORMATION
PROVIDING
UNIT

114

12

STORAGE UNIT

ACCOUNT
INFORMATION

STORAGE AREA

PRODUCT
INFORMATION

CONVERSION
COEFFICIENT
INFORMATION

STORAGE AREA

PRODUCT
INFORMATION

CONVERSION
COEFFICIENT
INFORMATION

# FIG. 7

2

COMPANY TERMINAL

21

CONTROL UNIT

211

INFORMATION
GENERATING UNIT

212

AUTHORITY
SETTING UNIT

213

LINKING
REQUEST UNIT

214

INFORMATION
ACQUIRING UNIT

# FIG. 8

EXAMPLE OF PRODUCT INFORMATION

| COMPANY ID | | C001 |
|---|---|---|
| COMPANY NAME | | COMPANY A |
| PRODUCT ID | | P001 |
| PRODUCT NAME | | PRODUCT A |
| LINKING-RELATED INFORMATION | UPSTREAM PRODUCT INFORMATION | POINTER |
| | TERMINATION FLAG | NONE |
| TRACEABILITY-RELATED INFORMATION | TOTAL USE AMOUNT (LITHIUM) | X11[g] |
| | RECYCLED MATERIAL USE AMOUNT (LITHIUM) | X12[g] |
| | TOTAL USE AMOUNT (NICKEL) | X21[g] |
| | RECYCLED MATERIAL USE AMOUNT (NICKEL) | X22[g] |
| | TOTAL USE AMOUNT (COBALT) | X31[g] |
| | RECYCLED MATERIAL USE AMOUNT (COBALT) | X32[g] |
| | TOTAL USE AMOUNT (LEAD) | X41[g] |
| | RECYCLED MATERIAL USE AMOUNT (LEAD) | X42[g] |
| | $CO_2$ EMISSION AMOUNT DURING PRODUCTION | . . . |
| | DD INFORMATION | . . . |
| . . . | | . . . |

# FIG. 9

LINKING DESTINATION SETTING
[DOWNSTREAM COMPANY: AAA CORPORATION]

| PRODUCT NUMBER | UPSTREAM COMPANY | UPSTREAM PRODUCT |
|---|---|---|

P001

☐ A CORPORATION
☐ B CORPORATION
☑ C CORPORATION
☐ D CORPORATION
☐ E CORPORATION
☐ F CORPORATION

☐ P10001
☑ P10002
☑ P10003
☑ P10004
☑ P10005
☑ P10006
☐ ...

☐ THIS PRODUCT IS TERMINAL
END OF TREE
(NO LINKING DESTINATION)

1001

SET LINKING
DESTINATION

# FIG. 10

CONVERSION COEFFICIENT REGISTRATION
[DOWNSTREAM COMPANY: AAA CORPORATION]

UPSTREAM PRODUCT

DOWNSTREAM PRODUCT
(IN-HOUSE PRODUCT)

PRODUCT NUMBER :P10001

PRODUCT NUMBER :P001

☐ CFP VALUE CONVERSION COEFFICIENT

UNIT BEFORE CONVERSION (UPSTREAM PRODUCT)

CONVERSION COEFFICIENT

UNIT AFTER CONVERSION (DOWNSTREAM PRODUCT)

X kg-CO2/m^3 ⇨ ( ) m^2 ⇨ Y kg-CO2/m

☐ LITHIUM AMOUNT CONVERSION COEFFICIENT

......

☐ NO CONVERSION COEFFICIENT REGISTRATION

2001

REGISTER

# FIG. 11

INFORMATION PROVIDING UNIT | 114

GENERATE PRODUCT TREE INTEGRATE TRACEABILITY-RELATED INFORMATION ON PRODUCT A BY USING CONVERSION COEFFICIENT

DEDICATED STORAGE AREA B OF COMPANY B

PRODUCT INFORMATION B

SHARED STORAGE AREA AB OF COMPANIES A, B

PRODUCT INFORMATION B

DEDICATED STORAGE AREA A OF COMPANY A

PRODUCT INFORMATION A

CONVERSION COEFFICIENT

AUTHORITY SETTING UNIT | 112

REGISTER CONVERSION COEFFICIENT FROM PRODUCT B TO PRODUCT A

LINKING UNIT | 113

PERMIT COMPANY A TO ACCESS PRODUCT INFORMATION B

CONVERSION COEFFICIENT REGISTRATION REQUEST

PERMIT COMPANY A TO MAKE ACCESS BY STORING COPY OF PRODUCT INFORMATION B IN SHARED STORAGE AREA AB OF COMPANIES A, B

# FIG. 12

EXAMPLE OF PRODUCT TREE BASED ON DISCLOSURE SETTING

FINAL PRODUCT X

PRODUCT A1

NOT DISCLOSED

NOT DISCLOSED

NOT DISCLOSED

NOT DISCLOSED

NOT DISCLOSED

PRODUCT A12

NOT DISCLOSED

NOT DISCLOSED

NOT DISCLOSED

PRODUCT A121

PRODUCT A122

PRODUCT A123

AAA CORPORATION
PRODUCT A121

LITHIUM USE AMOUNT                X [g]
REUSED LITHIUM AMOUNT             X [g]
NICKEL USE AMOUNT                 X [g]
REUSED NICKEL AMOUNT              X [g]
COBALT USE AMOUNT                 X [g]
REUSED COBALT AMOUNT              X [g]
LEAD USE AMOUNT                   X [g]
REUSED LEAD AMOUNT               X [g]

$CO_2$ EMISSION         [NOT
AMOUNT              DISCLOSED]

DD INFORMATION        ...

# FIG. 13

CFP VALUE OF PRODUCT A =
MEASURED CFP VALUE IN COMPANY A + CFP VALUE OF PRODUCT B ×
CONVERSION COEFFICIENT × ACTIVITY AMOUNT

**COMPANY B**
**(Tier N+1)**

SHARED
STORAGE AREA

TRACEABILITY
INFORMATION
ON UPSTREAM
PRODUCT

DEDICATED
STORAGE
AREA B OF
COMPANY B

PRODUCT
INFORMATION
B

TRACEABILITY-
RELATED
INFORMATION
ON PRODUCT B

**COMPANY A**
**(Tier N)**

SHARED STORAGE
AREA AB OF
COMPANIES A, B

TRACEABILITY
INFORMATION
ON PRODUCT B

DEDICATED
STORAGE
AREA A OF
COMPANY A

PRODUCT
INFORMATION
A

TRACEABILITY-
RELATED
INFORMATION
ON PRODUCT A

B → A
CONVERSION
COEFFICIENT

**COMPANY D**
**(Tier N-1)**

SHARED STORAGE
AREA AD OF
COMPANIES A, D

TRACEABILITY
INFORMATION
ON PRODUCT A

# FIG. 14

CONVERSION COEFFICIENT
REGISTRATION REQUEST PROCESS

OP101
IS USER
OPERATION FOR REGISTRATION
REQUEST INPUT?
NO → END

YES

OP102
IS CONVERSION
COEFFICIENT REGISTERED?
NO

YES

OP103
IS UNIT OF
PRODUCTION OF DOWNSTREAM
PRODUCT "PIECE"?
NO

YES OP104

CONVERT CONVERSION
COEFFICIENT: "PIECE" → "kg"

OP105

TRANSMIT CONVERSION
COEFFICIENT INFORMATION

END

# FIG. 15A

TRACEABILITY INFORMATION
CALCULATION PROCESS

OP201

IS TRACEABILITY
INFORMATION REQUEST
RECEIVED?

NO

END

YES

IDENTIFY UPSTREAM PRODUCTS
(NODES) THAT REACH TARGET
PRODUCT P (TIER P NODE)
ON PRODUCT TREE

OP202

REPEAT FOR SPECIFIC NODES
IN TIER M (MOST UPSTREAM)

ACQUIRE TRACEABILITY
INFORMATION ON PRODUCT m

OP203

TRANSFER TO DOWNSTREAM
PRODUCT IN TIER M−1

OP204

OP205

Tier M=Tier P?

YES

NO

OP206

A

TRANSMIT TRACEABILITY
INFORMATION
ON TARGET PRODUCT P

END

# FIG. 15B

```
                    ( A )
                      │
                      ▼
      ┌────────────────────────────────┐
      │ REPEAT FOR EACH TIER FROM      │
      │      TIER M−1 TO TIER P        │
      └────────────────────────────────┘
                      │
                      ▼
      ┌────────────────────────────────┐
      │ REPEAT FOR SPECIFIC NODES IN TIER N │
      └────────────────────────────────┘
                      │
                      ▼
      ┌────────────────────────────────┐
      │   ACQUIRE TRACEABILITY-RELATED │   OP211
      │ INFORMATION ON PRODUCT n (TIER N) │
      └────────────────────────────────┘
                      │
                      ▼
      ┌────────────────────────────────┐
      │  ACQUIRE TRACEABILITY INFORMATION │  OP212
      │     ON PRODUCT k (TIER N+1)    │
      └────────────────────────────────┘
                      │
                      ▼        OP213
              ◇ IS THERE CONVERSION ◇ ──── NO ──┐
              ◇    COEFFICIENT?    ◇            │
                      │ YES                     │
                      ▼                         │
      ┌────────────────────────────────┐        │
      │  ACQUIRE CONVERSION COEFFICIENT │  OP214 │
      └────────────────────────────────┘        │
                      │                         │
                      ▼                         │
      ┌────────────────────────────────┐        │
      │   CONVERT UNIT OF TRACEABILITY │   OP215 │
      │ INFORMATION ON PRODUCT k (TIER N+1) │    │
      └────────────────────────────────┘        │
                      ●◄────────────────────────┘
                      ▼
      ┌────────────────────────────────┐
      │      ACQUIRE TRACEABILITY      │   OP216
      │ INFORMATION ON PRODUCT n (TIER N) │
      └────────────────────────────────┘
                      │
                      ▼
      ┌────────────────────────────────┐
      │    TRANSFER TO DOWNSTREAM      │   OP217
      │    PRODUCT IN TIER N−1         │
      └────────────────────────────────┘
                      │
                      ▼
      └────────────────────────────────┘
                      │          OP218
                      ▼
              ◇   Tier N=Tier P?   ◇ ──── YES ──┐ OP219
                      │ NO                       ▼
                      ▼             ┌────────────────────────┐
      └────────────────────┘        │  OUTPUT TRACEABILITY   │
                      │             │   INFORMATION ON       │
                      │             │  TARGET PRODUCT P      │
                      │             └────────────────────────┘
                      ●◄──────────────────────────┘
                      ▼
                  ( END )
```

# FIG. 16

DEDICATED STORAGE AREA A OF COMPANY A

WRITING AUTHORITY:
COMPANY B

DEDICATED STORAGE
AREA B OF COMPANY B

PRODUCT
INFORMATION B

PRODUCT
INFORMATION B

PRODUCT
INFORMATION A

CONVERSION
COEFFICIENT

AUTHORITY
SETTING
UNIT 112

REQUEST
PERMISSION
FOR COMPANY A TO
ACCESS PRODUCT
INFORMATION B

REGISTER
CONVERSION
COEFFICIENT FROM
PRODUCT B TO
PRODUCT A

LINKING
UNIT 113

CONVERSION
COEFFICIENT
REGISTRATION
REQUEST

INVEST COMPANY B WITH WRITING
AUTHORITY FOR STORAGE AREA A
STORE COPY OF PRODUCT
INFORMATION B IN STORAGE AREA A
TO DISCLOSE IT TO COMPANY A

# FIG. 17

COMPANY B
(Tier N+1)

COMPANY A
(Tier N)

COMPANY D
(Tier N-1)

WRITING
AUTHORITY:
COMPANY B

WRITING
AUTHORITY:
COMPANY A

DEDICATED
STORAGE AREA B
OF COMPANY B

DEDICATED
STORAGE AREA A
OF COMPANY A

DEDICATED
STORAGE
AREA D OF
COMPANY D

PRODUCT
INFORMATION B

PRODUCT
INFORMATION A

TRACEABILITY-
RELATED
INFORMATION
ON PRODUCT B

TRACEABILITY-
RELATED
INFORMATION
ON PRODUCT A

TRACEABILITY
INFORMATION
ON PRODUCT A

TRACEABILITY
INFORMATION
ON UPSTREAM
PRODUCT

B → A
CONVERSION
COEFFICIENT

TRACEABILITY
INFORMATION
ON PRODUCT B

WRITING

WRITING

Europäisches
Patentamt

European
Patent Office

Office européen
des brevets

# EUROPEAN SEARCH REPORT

Application Number

EP 24 15 8922

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 112 817 773 A (HITACHI LTD) 18 May 2021 (2021-05-18) * pages 12-13 - pages 18-20; figures 1-39 * | 1-15 | INV. G06Q10/04 G06Q10/063 G06Q10/08 G06Q10/0833 G06Q50/04 |
| A | WO 2010/095687 A1 (HITACHI LTD [JP]; ISHII YOSHIKAZU [JP] ET AL.) 26 August 2010 (2010-08-26) * page 1 - page 10; figures 1-23 * | 1-15 | |
| A | NEVINE TEWFIK MINISTRY OF COMMUNICATIONS AND INFORMATION TECHNOLOGY (MCIT) EGYPT LEANDRO NAVARRO UNIVERSITAT POLITÃ CNICA DE CATA: "Draft Recommendation ITU-T L.GDSPP:"Requirements for a global digital sustainable product passport to achieve a circular economy?;Doc04", ITU-T DRAFT; STUDY PERIOD 2021-2024; STUDY GROUP 5; SERIES DOC04, INTERNATIONAL TELECOMMUNICATION UNION, GENEVA ; CH , vol. 7/5 28 November 2022 (2022-11-28), pages 1-49, XP044335567, Retrieved from the Internet: URL:https://www-api.itu.int/ifa/t/2022/sg5 /exchange/wp2/q07/2022/2022_11_29_e-meetin g/Doc04-Baseline-L.GDSPP-20221129-in.docx [retrieved on 2022-11-28] * page 15 - page 25 * | 1-15 | TECHNICAL FIELDS SEARCHED (IPC) G06Q |

The present search report has been drawn up for all claims

| Place of search | Date of completion of the search | Examiner |
|---|---|---|
| Munich | 10 August 2024 | Bîrlescu, V |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 15 8922

This annex lists the patent family members relating to the patent documents cited in the above-mentioned European search report.
The members are as contained in the European Patent Office EDP file on
The European Patent Office is in no way liable for these particulars which are merely given for the purpose of information.

10-08-2024

| Patent document cited in search report | Publication date | Patent family member(s) | Publication date |
|---|---|---|---|
| CN 112817773 A | 18-05-2021 | NONE | |
| WO 2010095687 A1 | 26-08-2010 | JP 5097728 B2 | 12-12-2012 |
| | | JP 2010191832 A | 02-09-2010 |
| | | WO 2010095687 A1 | 26-08-2010 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004171146 A